(19) Europäisches Patentamt

European Patent Office

Office européen des brevets

(11) **EP 1 185 405 B1**

(12) **EUROPEAN PATENT SPECIFICATION**

(45) Date of publication and mention
of the grant of the patent:
**17.05.2006 Bulletin 2006/20**

(51) Int Cl.:
*B29B 7/00* (2006.01)  *B01F 7/00* (2006.01)
*B29C 47/00* (2006.01)  *B29B 13/00* (2006.01)

(21) Application number: **00942758.4**

(22) Date of filing: **12.06.2000**

(86) International application number:
**PCT/US2000/016086**

(87) International publication number:
**WO 2000/076735 (21.12.2000 Gazette 2000/51)**

(54) **PLASTICS VISCOSITY CONTROL  APPARATUS**

GERÄT ZUM KONTROLLIEREN DER KUNSTSTOFFVISKOSITÄT

APPAREIL  DE REGULATION DE LA VISCOSITE DU PLASTIQUE

(84) Designated Contracting States:
**AT BE CH CY DE DK ES FI FR GB GR IE IT LI LU
MC NL PT SE**
Designated Extension States:
**LT LV RO**

(30) Priority: **15.06.1999  US 333544**

(43) Date of publication of application:
**13.03.2002  Bulletin 2002/11**

(73) Proprietor: **Stratek Plastics Limited
Dublin 2 (IE)**

(72) Inventor: **Ibar, Jean-Pierre
Wallingford
Connecticut 06492 (US)**

(74) Representative: **MacLachlan, Norman William et al**
**c/o MacLachlan & Donaldson,**
**47 Merrion Square**
**Dublin 2 (IE)**

(56) References cited:
| | |
|---|---|
| US-A- 2 591 966 | US-A- 2 838 794 |
| US-A- 2 893 708 | US-A- 2 969 960 |
| US-A- 3 189 325 | US-A- 3 219 320 |
| US-A- 3 224 739 | US-A- 3 471 131 |
| US-A- 3 687 423 | US-A- 3 861 287 |
| US-A- 3 869 111 | US-A- 4 175 873 |
| US-A- 4 268 176 | US-A- 4 714 422 |
| US-A- 4 730 935 | US-A- 4 889 430 |
| US-A- 4 897 236 | US-A- 4 908 101 |
| US-A- 4 963 033 | US-A- 5 141 328 |
| US-A- 5 332 314 | US-A- 5 823 673 |
| US-A- 5 885 495 | US-A- 5 902 042 |

## Description

### CROSS-REFERENCE TO RELATED APPLICATION

This is a continuation-in-part of US-6 210 030 B1 filed June 15, 1999 and entitled METHOD AND APPARATUS TO CONTROL VISCOSITY OF MOLTEN PLASTICS PRIOR TO A MOLDING OPERATION.

### FIELD AND BACKGROUND OF THE INVENTION

The present invention relates in general to molding with polymers, and in particular to a new and useful apparatus and method for controlling the viscosity of various polymeric materials by shear thinning and/or disentanglement, as well as special measures for controlling the viscosity of polymeric materials that are capable of crystallizing upon cooling at a temperature which prevents disentanglement to take place in the optimum conditions. This is the case for semi-crystalline polymers such as Nylon 66, for example.

It is well known for molding polymeric materials that the processing parameters (e.g. temperatures, pressures, flow rates, flow length etc.) are a direct consequence of the viscosity of the melt which is governed by the state of entanglements of the macromolecules. The resin "melt index" usually characterizes the fluidity of the melt and can be used to specify a certain resin grade suitable for a given molding application. The melt index is a function of the molecular weight of the macromolecular chains and their degree of entanglement. A high melt index corresponds to a high flow resin. The mechanical performance of a molded product is also a strong function of its molecular weight characteristics, the longer the macromolecular chains the stronger and stiffer the final article. Unfortunately the high strength required of plastics during their usage often results in a lack of fluidity during the molding operation, with as a result, high operational molding costs and molding defects (weld lines, sink marks etc.). One accepted practice which is designed to compensate for this lack of control of melt fluidity includes decreasing the molecular weight of the macromolecules being molded. Although this decreases the viscosity, improving the flow length significantly, it often results in a reduction of the mechanical properties, in particular strength and stiffness. Moreover, this practice cannot be used in those instances wherein the final molded product has to be very small and/or thin, such as in thin-wall injection molding applications.

Resin suppliers have succeeded in providing the plastic industry with means to lower the viscosity to ease up processing or increase melt elasticity by blending grades of different molecular weights. The problem with that solution is that the mechanical performance of the lower molecular weight polymers is also severely reduced, a compromise for better processability which processors have to pay.

The industry would welcome a process which allows the decrease of viscosity of plastic melts without the need to change the molecular weight of the resins, with the added advantage of a reduction in the number of grades a resin manufacturer has to offer.

Shear thinning of plastic materials is well known and is used practically to lower the viscosity of melts during the filling stage of injection molding by increasing the speed of the injecting piston. This is particularly useful in the case of thin wall injection molding where considerable forces are required to fill the mold when the viscosity of the melt remains quasi-Newtonian.

It is also well known that shear thinning can be obtained, at a given temperature, by either increasing the shear rate or the frequency of oscillation of the melt at constant amplitude of oscillation. In particular, it is well known that the viscosity of a plastic melt can be reduced by shear thinning induced by vibration. See US Patent 4,793,954 to Lee; J.P. Ibar, " Melt Viscosity Reduction of Plastics by Vibration during Filling in Injection Molding", ANTEC 1997, Toronto, SPE Reprints (1997); and J.P. Ibar, "Smart Processing of Plastics Through Vibration Controlled Shear Thinning and Orientation", 1997 ASME International Mechanical Engineering Congress and Exposition. Reprint MD-Vol. 79, pp 223-348, 1997.

Shear thinning does not invoke the same mechanism of viscosity reduction than what is required to produce long term viscosity reduction by disentanglement. See, for example, US Patent 5,885,495 to Ibar. Shear thinning results from the elastic cooperativity of the network of interactions between parts of the macromolecules called conformers. The viscosity reduction is instantaneous and only prevails under vibration, i.e. it ceases if the vibration ceases. Shear thinning can be useful, however, and can be optimized or favored in a plastic according to the present invention, in ways that are not known or obvious to the person of ordinary skill in this field.

Viscosity reduction induced by vibration-shear thinning is known. An example is described in J.P. Ibar, "Smart Processing of Plastics Through Vibration Controlled Shear Thinning and Orientation", 1997 ASME International Mechanical Engineering Congress and Exposition.

US Patent 5, 885, 495 teaches there are three categories of known processes that use vibration to modify the molding process and/or the properties of molded materials:

1. Mechanical shaking/oscillation or ultrasonic vibration devices to homogenize and increase the density of the material molded, either in the liquid stage or in the solidifying stage, either at a macroscopic or microscopic level See US Patent 4,288,398 to Lemelson; US Patent 3,298,065 to Pendleton; and US Patent 4,925,161 to Allen et al. These patents do not directly concern the use of vibration to lower the viscosity of a melt to increase their processability during conversion, nor do they address the use of packing vibration to increase the melt elasticity.

2. Processes based on the fact that material rheology is a function of vibration frequency and amplitude in addition to temperature and pressure: See US Patent 4,469,649; EP Patent 0 273 830; US Patent 5,306,129; US Patent 4,919,870; CA Patent 1,313,840; and EP Patent 0 274 317; all to Ibar. The teachings in these patents, however, do not alter the viscosity of the melts in a way which preserves the viscosity reduction nor do they optimize shear thinning effects by the introduction of ribs on the surface to create oscillating extension flow.

3. Processes using vibration to generate heat locally by internal friction or to decrease surface stresses at the wall interface between the melt and the barrel or the die to increase throughputs: See Casulli et al. "The Oscillating Die: A Useful Concept in Polymer Extrusion" Polym. Eng. Sci.; 30 (23), 1551 (1990) and Wong et al. "Flow of Thermoplastics in an Annular Die under Parallel Oscillations", Polym. Eng. Sci.; 30 (24), 1574 (1990), for example. These processes do not try to modify the viscosity of the melt per se, in a way which would be similar to a reduction of the molecular weight average of the macromolecules.

The polymer molding industry would greatly welcome an apparatus and/or method which decreases the viscosity of macromolecules without changing their mechanical performance. Such a process is described in US Patent 5, 885, 495 to Ibar where the macromolecules are pulled apart to produce the disentanglement effect which is responsible for the lowering of viscosity.

In general, in order to use frequencies for the oscillating extensional flow which remain economically feasible to practice industrially, it is necessary to lower the temperature of the melt to a temperature zone well within the rubbery flow region of the polymer.

For amorphous polymers, the lowest possible temperature limit to enable flow to take place is the glass transition temperature of the polymer, $T_g$. Below that temperature, the polymer is no longer a melt and becomes a solid glass which does not flow. For such polymers, it is generally possible to find a disentanglement processing temperature well above $T_g$ at which the polymer can still flow and be treated mechanically at constant temperature according to US Patent 5,885,495.

Semi-crystalline polymers, such as Nylon 66, are amorphous melts above their temperature of crystallization, $T_c$, and solids presenting a crystallographic structure below $T_c$. In general, the glass transition temperature of the remaining amorphous phase present, which co-exists with the crystalline phase, is located much below $T_c$, hence in the solid state of the polymer. For such semi-crystalline polymers, the disentanglement processing window is restricted since it can only be located above $T_c$.

For some semi-crystalline polymers, such as ENGAGE 8180, a trademark for a metallocene Polyethylene polymer sold by Dupont-Dow Elastomers LLP, the amount of entanglement is so high, and the resulting elasticity of the melt is so sensitive to the effect of a shear oscillation, that manageable low mechanical frequencies (below 50 Hz) are able to bring the melt in the optimized elastic region favorable to extensive chear-thinning capable of producing disentanglement [2], even at temperatures well above the crystallization temperature. For instance, the crystallization temperature $T_c$ for ENGAGE 8180 is 60°C, and the most favorable temperature range which optimizes shear-thinning capable of producing disentanglement is between 110°C and 160°C. As a consequence, there is no interference or limitation from the phenomenon of crystallization in obtaining high elastic state for a flowable, extrudable ENGAGE 8180. This is not the case for other semi-crystalline polymers, such as Nylon 66, for which desirable high elastic states cannot be obtained, under the effect of combined shear oscillation (of manageable frequency) and temperature, at temperatures above the crystallization temperature $T_c$ of the polymer. For such semi-crystalline polymers, temperature cannot be lowered enough before crystallization temperature is reached, which interferes with the disentanglement process.

United States Patent Specification No. US-A-2,969,960 discloses an apparatus for mixing liquids together, particularly for mixing the components of a polyurethane plastic. An apparatus is disclosed having a mixing chamber provided with means for injecting components of a polyurethane plastic therein and agitation means having a shaft and stirrer element comprising a substantially fruoto-conically shaped portion having a plurality of tooth-like projection; the mixing chamber being substantially concentric with the frusto-conical portion of the stirrer and only slightly larger in cross-sectional dimensions so that the capacity of the mixing chamber is relatively small. The specification also discloses that in order that the apparatus be self-cleaning, the stirrer has the shape of two frustums whose bases abut each other. That frusto-conically shaped portion terminating at the shaft is preferably provided with oblique ribs which act as pumping vanes tending to move liquid in the chamber towards the discharge end. The second frusta-conically shaped portion, i.e. the one abutting the frusto-conically shaped portion having the vanes, has the tooth-like projections which enhance its stirring ability.

The present invention provides a new apparatus and method which applies the disentanglement process taught in US Patent Specification No. 5,885,495 for use on an industrial scale and which also identifies additional measures involving temperature control and shear thinning techniques that are novel and unobvious over the prior art.

## SUMMARY OF THE INVENTION

The present invention overcomes the prior art problems and shortcomings in a method and apparatus which produces a novel product wherein extensional shear vibration is exercised on a molten plastic as it is continuously extruded to pass through treatment stations at determined temperature, frequency and amplitude of vibration, during a certain time and under specific vibrating conditions for each station, to obtain a controlled degree of shear-thinning (elastic state) susceptible to result in a progressive decrease of the entanglements between the macromolecules, in order to significantly and controllably decrease the viscosity of the extruded melt in a manner which can be beneficial to future molding operations requiring a lower melt viscosity.

A method and apparatus are disclosed for decreasing in a continuous way the viscosity of molten polymers, such as a metallocene polyethylene or polycarbonate, prior to or during a molding operation such as injection molding, extrusion, thermoforming, blow molding or compounding. When a significant reduction of viscosity is desirable, the plastic melt is submitted to the action of a specific mechanical extensional shear vibration, with minimum or no external pressure, within a specific range of amplitude and frequency of melt oscillation to cause the melt to become highly elastic, and simultaneously to be fatigued in extensional flow conditions for a certain time, maintaining this high elastic state which corresponds to a high degree of shear-thinning, until the macromolecules have partially or totally disentangled, in a controllable manner, at which stage the melt is ready for a molding operation such as a simple quenching operation or an extrusion process followed by quenching to produce pellets or compounds with a better mix or a lower viscosity when remelted, or an injection molding or similar molding operation where the melt viscosity has been greatly reduced allowing a better processability of the injected part, for instance allowing the use of a lower temperature of injection, a lower pressure of injection or both, or even in a value gate or extruder where surfaces of the rod, stem, rotor or screw of these units can be equipped with the rib means of the present invention and move according to the present invention to achieve the shear-thinning and viscosity reduction effect.

Accordingly, one object of this invention is to provide a molding apparatus and/or method which can reduce the viscosity of melt in a given controllable degree by shear-thinning/disentanglement of the macromolecules while the resin is in the melt.

Another object of this invention is to provide a molding apparatus and/or method which can continuously produce reduced viscosity resins which can be either stored and bagged as special low melt viscosity producing pellets or pumped to another molding site for immediate use.

These and other objects are achieved through the advent of a novel apparatus and/or a method of using the same. The novel apparatus includes, among other things, at least one station which defines a cavity, the treatment cavity, wherein a molten moldable material can pass into and/or flow through it to be treated to produce at least partially disentangled melts or even melts that are only subjected to shear thinning, e. g. according to the process described in US Patent 5,885,495.

The treatment station of the apparatus includes means for exerting a shear drag at given strain rate of the molten moldable material as it flows through from the inlet to the outlet of the treatment station.

The treatment station includes rib means for exerting a variation of the shear strain rate of the molten moldable material as it flows through from the inlet to the outlet of the treatment station such that it produces extensional acceleration/deceleration of the flow.

The apparatus includes means to move the melt, e.g. to continuously push and/or drag and/or pump the melt located in the station treatment cavity from the inlet conduit towards its outlet conduit.

Also included in this apparatus are means to vary the gap which the molten, moldable material can pass and/or flow through.

Also included in the apparatus are means to continuously vent the treatment cavity to prevent the formation of bubbles or cavitation during the treatment.

The apparatus also includes various known monitoring and control devices for temperature, pressure, torque exerted on the molten moldable material contained within the treatment cavity(s).

Another object of the present invention to provide a novel method of processing semi-crystallizable polymers in order to disentangle their melt without the interference of crystallization by varying the temperature during the shear thinning or disentanglement treatment in a controllable way which pushes down to a lower temperature the beginning of crystallization and, therefore, allows the use of lower temperatures for increasing the elasticity of the melt by the shear oscillation methods.

Other objects, aspects and advantages of the present invention will be apparent to those skilled in the art upon reading the specification and the appended claims which follow.

The various features of novelty which characterize the invention, are pointed out with particularity in the claims annexed to, and forming a part of this disclosure. For a better understanding of the invention, its operating advantages and specific objects attained by its uses, reference is made to the accompanying drawings and descriptive matter, in which preferred embodiments of the invention are illustrated.

## BRIEF DESCRIPTION OF THE DRAWINGS

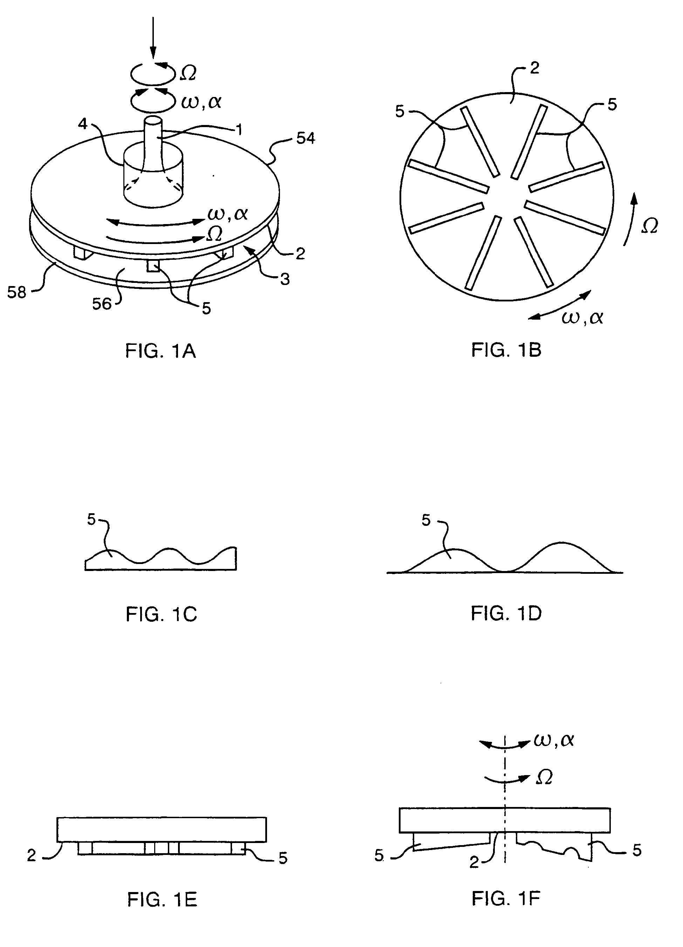

FIGS. 1A, 1B, 1C, 1D, 1E and 1F are schematic illustrations of embodiments of a shear thinning and/or disentanglement apparatus designed in accordance with the present invention having a single feeder and a single treatment cavity, wherein the shear vibration under extensional flow is produced by rotating at constant speed and/or at modulated speed and/or by pure oscillation an incoming melt which flows outwards over ribs disposed on at least one surface.

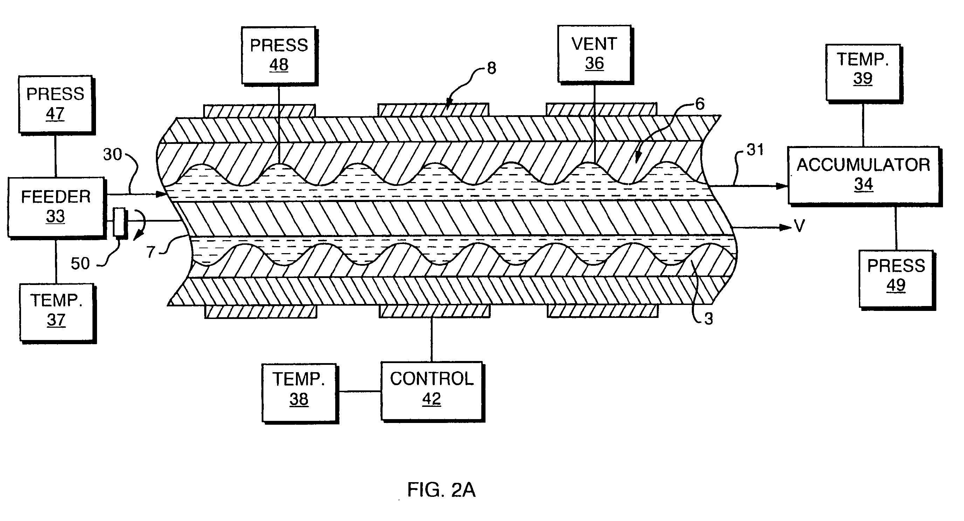

FIG. 2A is a schematic illustration of one embodiment of a disentanglement apparatus designed in accordance with the present invention having a single feeder and a single treatment cavity, wherein the shear vibration under extensional flow is produced by feeding a molten moldable material through a gap composed of at least one rotating and/or oscillating surface presenting on its contour a profile over which the molten material flows and/or can be dragged and/or is being pushed through and/or pumped through.

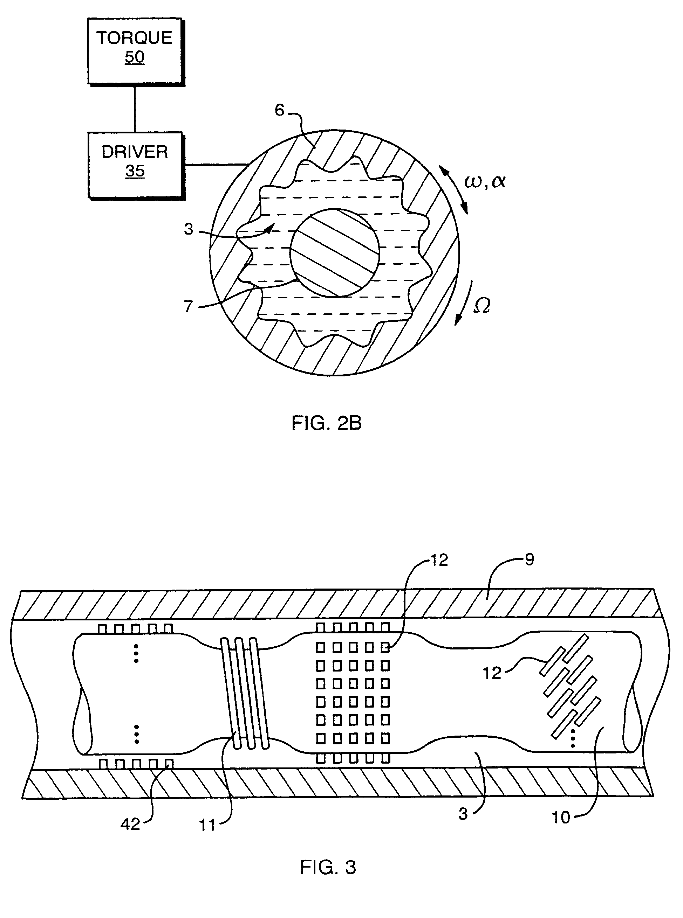

FIG. 2B is a sectional view of FIG. 2A taken across the axis of FIG. 2A.

FIG. 3 is a schematic illustration of an embodiment of a shear-thinning and/or disentanglement apparatus designed in accordance with the present invention having a single feeder and more than one treatment cavity, separated by a pumping section, wherein the shear vibration under extensional flow in the treatment cavity section is produced by feeding a molten moldable material through a gap composed of at least one rotating and/or oscillating surface presenting on its contour a profile over which the molten material flows and/or can be dragged and/or is being pushed through and/or pumped through. FIG. 3 also illustrates the use of the invention in an extruder.

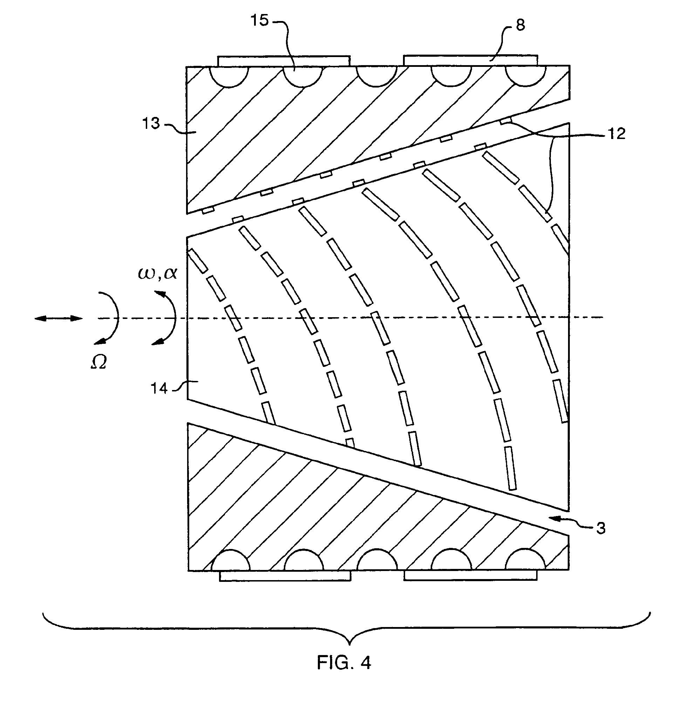

FIG. 4 is a schematic illustration of one embodiment of the treatment cavity of the disentanglement apparatus designed in accordance with the present invention wherein the shear vibration under extensional flow is created in the gap of concentric conic surfaces in relative motion with respect to one another, at least one of which presenting an array of ribs and bumps and rotating at constant speed and/or at modulated speed and/or in a pure oscillation mode.

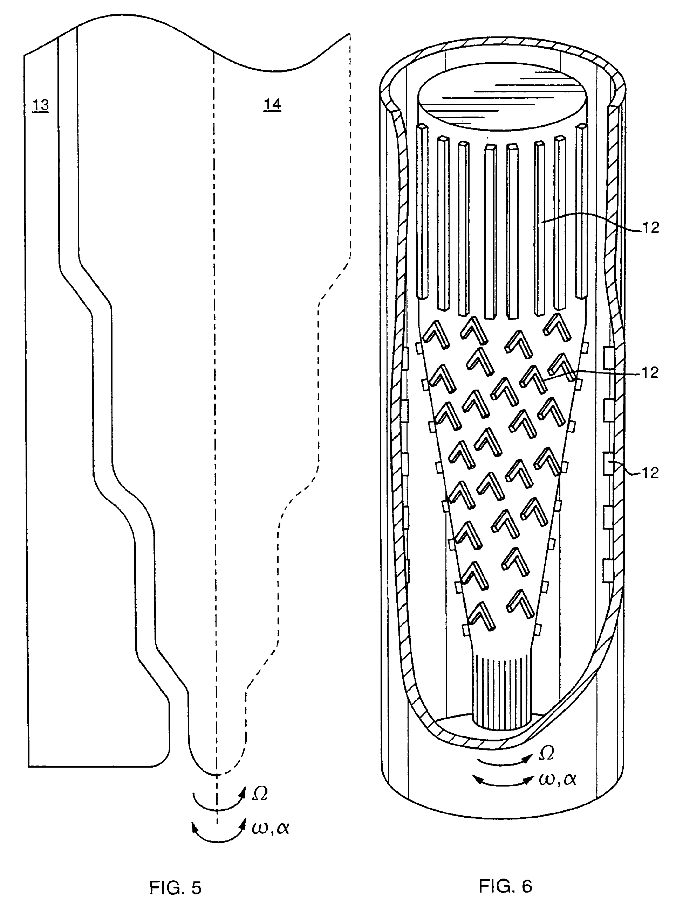

FIG. 5 is a schematic illustration of one embodiment of the treatment cavity of the disentanglement apparatus designed in accordance with the present invention.

FIG. 6 is a schematic illustration of one embodiment of the treatment cavity of the disentanglement apparatus designed in accordance with the present invention.

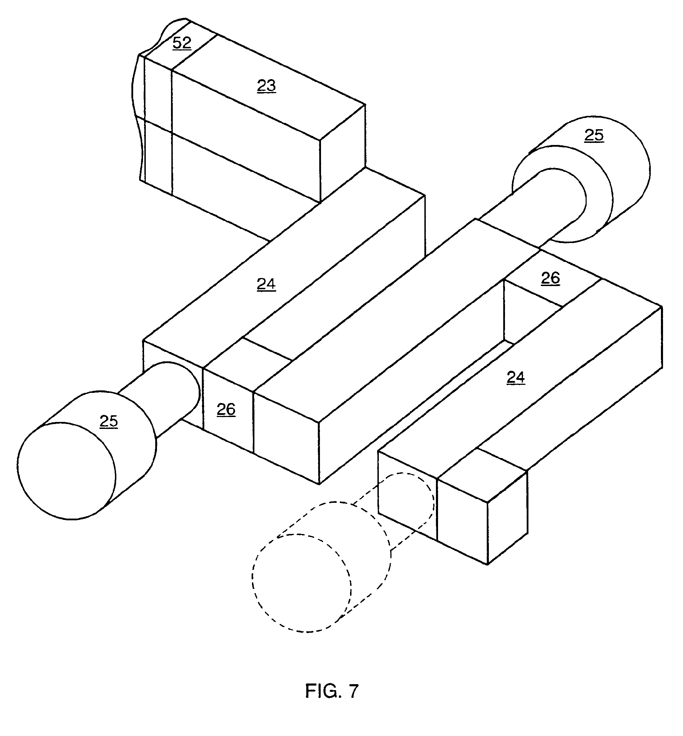

FIG. 7 is a schematic illustration of one embodiment of the disentanglement apparatus designed in accordance with the present invention wherein the feeder is an extruder and/or a plunger, the disentanglement treatment occurs in a series of stations connected through gear or screw pumps, and the accumulator of the last station is connected to a pelletizer line and/or the feed of an extruder or injection molding equipment or injection molding cavity.

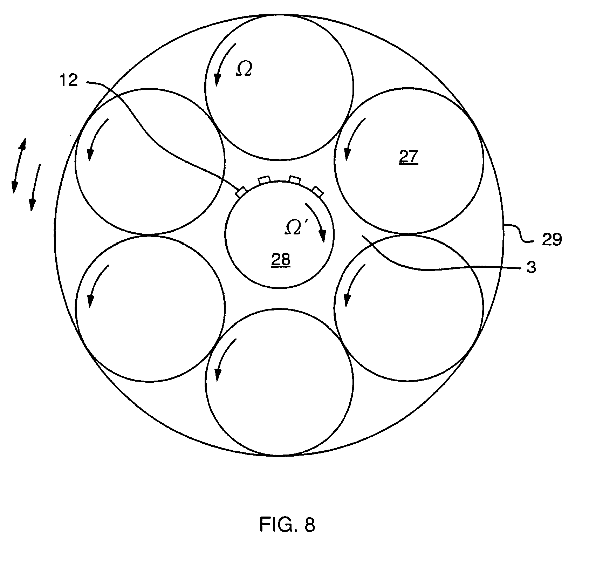

FIG. 8 is a schematic illustration of one embodiment of the treatment cavity of the disentanglement apparatus designed in accordance with the present invention wherein the shear vibration under extensional flow is created in the gap between cylindrical or conical rollers in close contact to one another and creating a rolling and/or vibrating wall, and a core surface at the center, at least one surface rotating at constant speed and/or at modulated speed and/or in a pure oscillation mode.

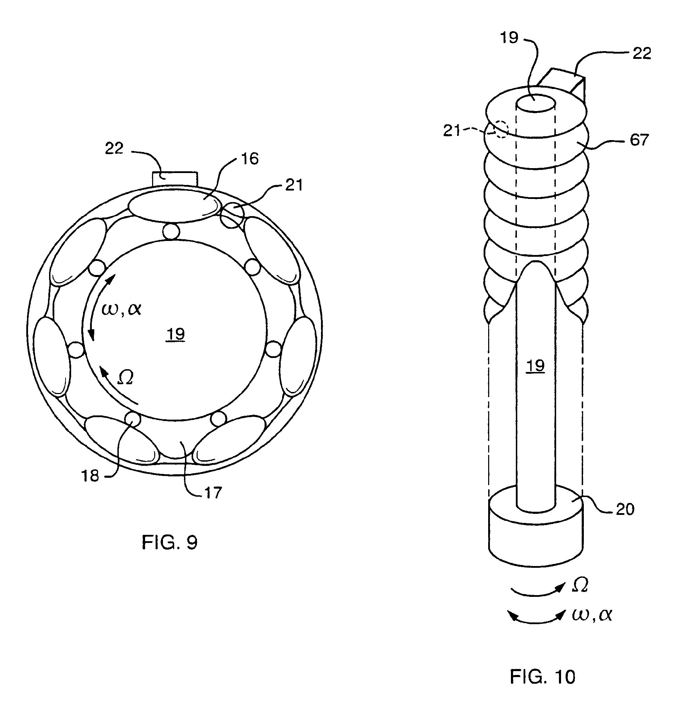

FIG. 9 is a schematic illustration of one embodiment of the treatment cavity of the disentanglement apparatus designed in accordance with the present invention wherein the shear vibration under extensional flow is created by the relative motion in the molten moldable material of a train of submarine-shaped wagons circulating, at constant speed or at a modulated speed, in a torus ring in communication with an inlet and an oulet conduits.

FIG. 10 is a schematic illustration of one embodiment of the disentanglement apparatus designed in accordance with the present invention wherein the feeder is an extruder and/or a plunger, the disentanglement treatment occurs in a series of superposed and interconnected ring stations defined by a tubular track through which trains of submarine-shaped wagons circulate at controlled speed, and the accumulator of the last ring station is connected to a pelletizer line and/or the feed of an extruder or injection molding equipment.

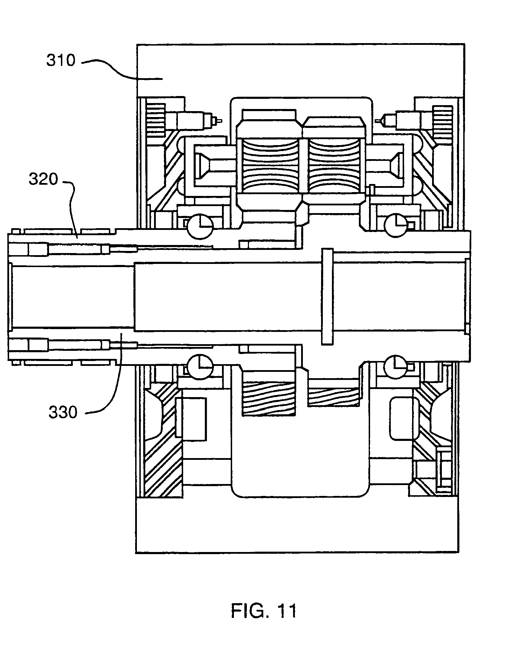

FIG. 11 is a schematic illustration of one embodiment of the power transmission of the shear-thinning/disentanglement apparatus designed in accordance with the present invention wherein the shear flow obtained by pure rotation and the controlled extensional fatigue of the molten moldable material in the treatment cavity created by the oscillation are independently applied on both axes of a differential which combines both rotation and oscillation (also called an epicyclcloidal drive).

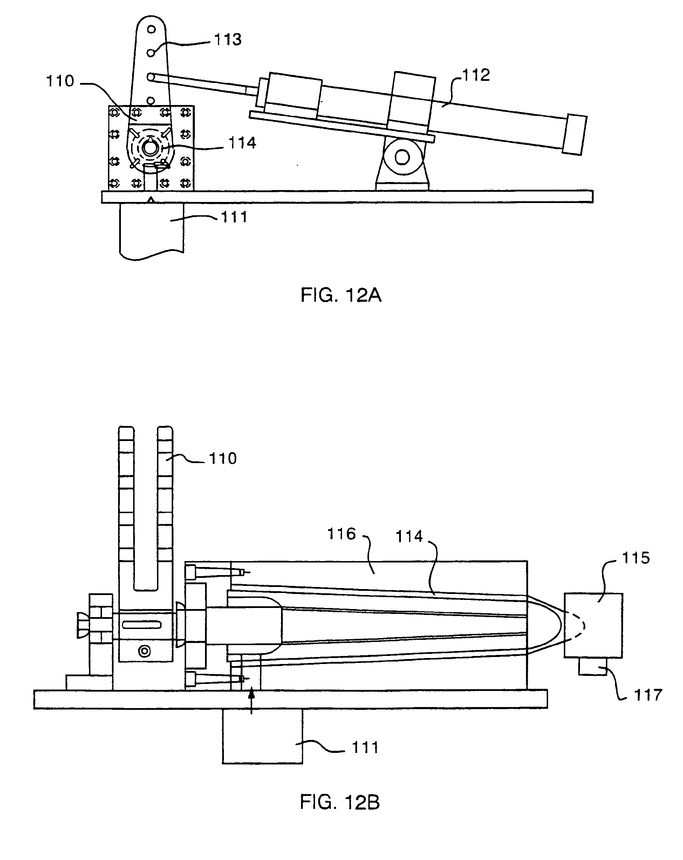

FIG. 12A is a schematic end view of one embodiment of the shear vibration transmission of the disentanglement apparatus designed in accordance with the present invention wherein the shear vibration in the molten moldable material in the treatment cavity is created by the oscillation of the inner cone of a concentric conical assembly attached to one axis of an epicyclcloidal differential, the rotary oscillation being created through a cam and a piston.

FIG. 12B is a side view of FIG. 12A.

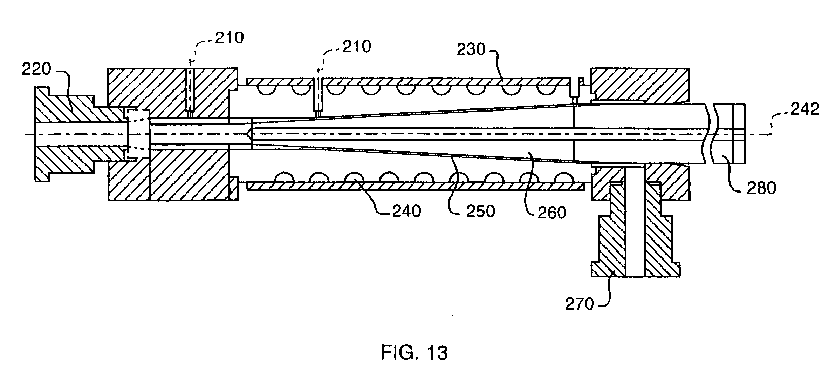

FIG. 13 is a schematic illustration of one embodiment of the treatment cavity of the disentanglement apparatus designed in accordance with the present invention wherein the shear vibration under extensional flow in the molten moldable material is created by the relative motion of two concentric conic surfaces at constant speed or at a modulated speed, or at a combined constant and modulated speed, while the molten moldable material is pushed and/or dragged and/or pumped from the inlet conduit to the outlet conduit of the treatment cavity.

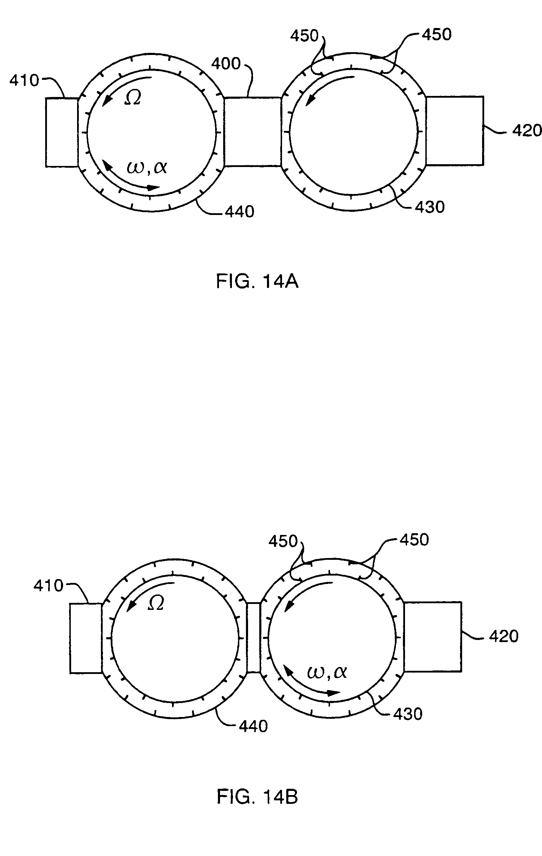

FIG. 14A is a schematic illustration of one embodiment of the disentanglement apparatus designed in accordance with the present invention wherein one or several feeders feed molten moldable material to a series of tubular cavities, intermeshing or not, which themselves connect, directly or through pumping sections, to other series of tubular cavities, so on and so forth until the last series of treatment stations which connects to a collector and a pellitizer line and/or the feed of an extruder or injection molding equipment.

FIG. 14B is a view similar to FIG. 14A, but showing a different mode of operation.

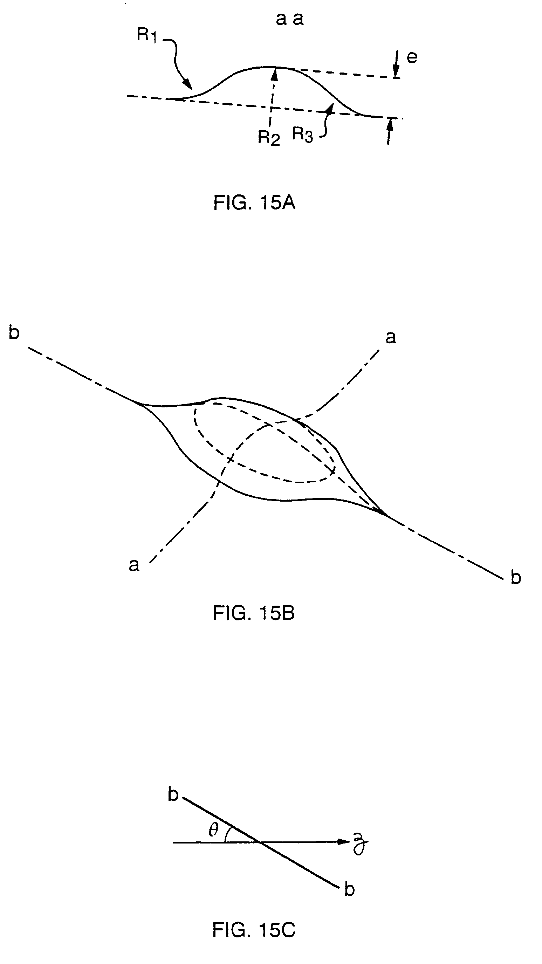

FIGS. 15A, 15B and 15C are schematic illustrations of one embodiment of the treatment cavity of the disentanglement apparatus designed in accordance with the present invention wherein the rib means are ribs/bumps on at least one of the surfaces in contact with the molten moldable material have a specific shape to create a given profile of strain rate and strain rate variation under extension, and are aligned in a specific manner with respect to the axis of surface rotation in order to create a certain amount of drag flow. FIGS. 15A to 15C define some of the shape parameters and the angle of tilt. The contours of the ribs are calculated to eliminate any possibility of turbulence or other non linear defect in the flow, which should remain laminar. The height of the rib, e, the width of the ribs, w, the radius R1, R2 and R3 which define the curvature to accelerate (R1) or decelerate (R3) the flow, can be different along cross sections aa and bb (the cross section bb is not shown here). The strain rate vector decomposes into two components, which defines two directions of drag flow. The shape of the ribs along each axis aa or bb is determined by the strain rate profile (acceleration followed by deceleration) desired in these directions. Both profiles can be used to define conditions of shear vibration and/or extensional fatigue which can couple up to optimize elasticity of the melt (shear-thinning) resulting in disentanglement effects.

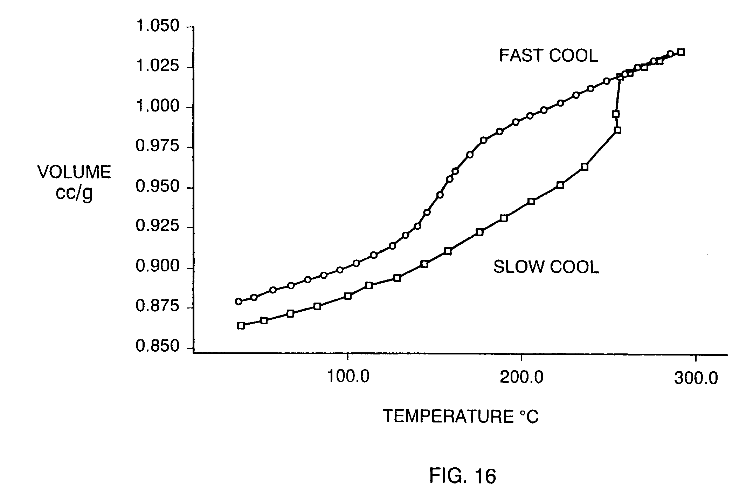

FIG. 16 is a graph plotting specific volume (in cc/g) of Zytel 101, a Nylon 66 from the Dupont de Nemours Company (Geneva, Switzerland), versus Temperature (°C), at two different cooling rates, one corresponding to a slow cooling rate, the other one corresponding to a quenching operation typical of the cooling speed obtained in injection molding, for instance. These curves correspond to a 2mm thick slab of Nylon 66 cooled from 300°C to room temperature.

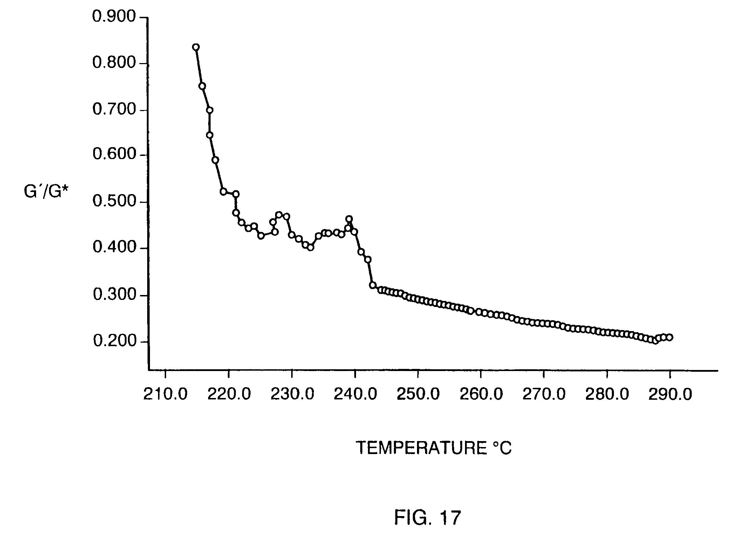

FIG. 17 is a graph plotting the relative elasticity in shear mode, G'/G*, while cooling at 10°C/min for a Nylon 66. G' is the elastic modulus and G* the complex modulus for a frequency of 10 rad/s.

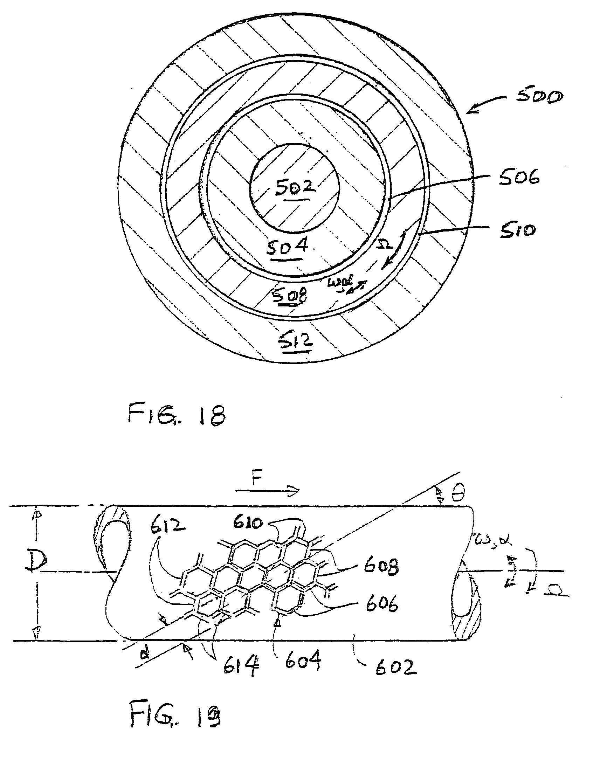

FIG. 18 is a sectional view of an embodiment of the invention that has two concentric treatment chambers.

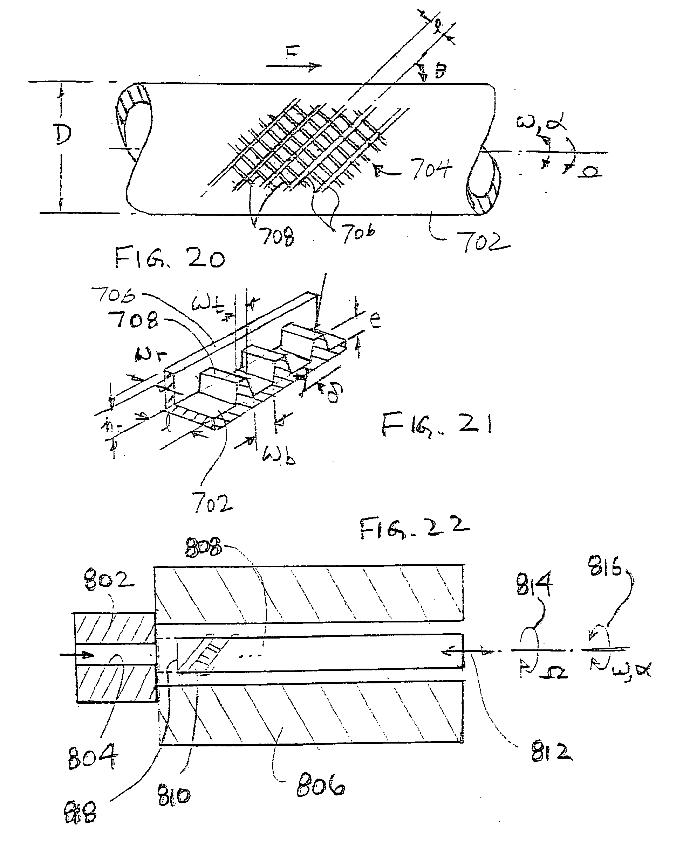

FIG. 19 is a partial side elevational view of a rotor, rod or stem with honeycomb rib means according to the invention.

FIG. 20 is a view similar to FIG. 19 of an embodiment of the invention with rail means uses as the rib means of the invention.

FIG. 21 is an enlarged perspective view of the rail means.

FIG. 22 is an axial sectional view, partly in elevation, of a value gate made according to the present invention.

## DESCRIPTION OF THE PREFERRED EMBODIMENTS

The present invention pertains to apparatuses for reducing the viscosity of moldable materials (e.g., polymers) through disentanglement processes. It also pertains to methods of using such apparatuses.

The apparatus encompassed by the present invention includes at least one slit cavity, the treatment cavity, where molten moldable material flows through Under conditions where shear vibration under extensional flow takes place to enable disentanglement to occur. The apparatus is not limited to any specific cavity design nor configuration, provided laminar flow without turbulence or cavitation prevails. For instance, the cavity can have a constant gap or a variable gap. The cavity can have sections of constant gap followed by sections of variable gaps. The gap cross section dimensions at any given point of the flow path determine the strain and strain rate of deformation on the molten moldable material at that point. Examples of calculation of strain and strain rate as a function of gap geometry can be found in J.D. Ferry, "Viscoelastic Properties of Polymers", Appendix C, page 640, Second Edition, John Wiley & Sons, NY. Library of Congress Catalog Card#: 76-93301. For an annulus (circular slit), the gap cross-section is determined by the radius and height of the gap. Pressure drop, shear stress at the wall and flow rate are a strong function of melt viscosity which varies with strain rate, temperature and gap profile. In summary, the gap profile is crucial not only to determine the extent of flow, i.e. the throughput, but also to implement a certain type of flow. For instance, a gap convergence creates an acceleration of flow, and its extension. Conversely, a gap divergence translates into a deceleration and a contraction of flow. Obviously, a succession of restriction and enlargement of the gap, in the pathway of a flowing molten moldable material, results in a periodic variation of the strain rate from acceleration to deceleration, and of the strain from extension to contraction. If ribs are regularly disposed on at least one surface in contact with a melt flowing in the gap created by two adjacent surfaces, a periodic shear oscillation under extensional flow is created which, according to the present invention, can be set to produce a high elastic state (shear-thinning) favorable to induce disentanglement effects, using operating conditions of strain rate and strain taught in US Patent 5,885,495. Upon reading this specification, those skilled in the art will know what types of slit geometry and configuration can be used when practicing the invention. For instance, the disentanglement treatment cavity can be an extrusion barrel/screw die or valve gate bushing/rod modified to incorporate the rib means features capable of bringing the melt in the processing window region required by US Patent 5,885,495 to produce disentanglement. This can be done by re-designing the screw profile and the gap between the barrel and the screw and by adding specifically designed ribs and/or grooves on both the inside surface of the barrel and on the screw. The modified screw rotates inside the close fitting barrel, shearing the molten moldable material over the profiled gap. A multiple screw treatment cavity can be built wherein the screw flights intermesh. When it is the case, the action of the intermeshed screw is, in addition to producing a vibrational flow under extension, to move forward the molten moldable material due to positive displacement, in a way somewhat similar to that of a gear pump. Single screw cavity and nonintermeshing multiple screw disentanglement cavities lack this positive displacement, but the ribs and grooves can be spaced and positioned with respect to the rotation motion such that a longitudinal strain rate is added to that caused by pressure flow. Upon reading this specification, those skilled in the art will know what types of ribs and grooves can be added to an extrusion barrel and screw dies in order to practice the invention and create a pumping effect at the same time.

Use of the invention in a valve gate is discussed later in this disclosure, in connection with FIG. 22.

In general, the preferred treatment cavity design of the present invention will depend, in part, upon the nature of the resin to be elasticized or disentangled, the throughput desired and the resources available to the practitioner of the invention. For instance, if enough resources are available, an apparatus comprising multi disentanglement stations is desirable wherein each individual station is set to optimize throughput, not disentanglement efficiency, but viscosity reduction is compounded at each station to yield a final disentangled melt, produced at fast rate, with the proper final viscosity reduction ratio. For instance, a 5 station disentanglement apparatus, working at a low efficiency rate of 27.5% per station ($\mu_{out}/\mu_{in} = 0.725$), produces a melt with final viscosity reduction of 5, which is $(0.725)^{-5}$. The throughput of such a multi station disentanglement apparatus is many times greater than the troughput of a single station working to produce the same result in terms of viscosity reduction. The operating cost per weight produced is also greatly reduced.

The inlet through which the molten moldable material passes through the treatment cavity is connected to at least one feeder for preparing a molten, moldable material. The feeder is spaced from the treatment cavity and any other feeder which may be present. The feeder includes a means for expelling the molten, moldable material through its outlet. This expelling action can be accomplished by any suitable means known to those skilled in the art. Some examples of feeders which include such an expelling means include, without limitation, screw pumps as used in extrusion and in injection molding apparatuses, twin screws as used with blends, plungers as used in two-stage molding apparatuses, gear pumps, and the like. This expelling action can include means to pressure pulse the melt to facilitate flow, as described in References [12,13,14-16,19,20], although such a conditioning is not required by the present invention.

It is also within the scope of this invention for the apparatus to include a plurality of feeders. If a plurality of feeders are employed, the molten, moldable material prepared in each need not be the same. For example, each feeder can contain the same material. They can also contain the same material but at a different temperature, and/or different molecular weight characteristics, and/or different degree of disentanglement. Specifically, one material in one feeder may be a highly disentangled fraction coming from a different treatment station (downstream or else), whereas another material may be less disentangled. This changes the concentration of disentangled fractions and allows to engineer specific bimodal blends of grades having different states of disentanglement. The separate feeders can also contain materials which are virgin in one and recycled in another. Moreover, the individual feeders can contain completely different materials or materials which are filled or unfilled with fibers, fillers (such as wood, flour or ESD powder to name a few), different concentration of blends of polymers and/or polymers/liquid crystal polymers, pigments, antioxidants, flame retardant compounds, and the like, and/or any combination thereof. The second or third feed can be introduced into the disentanglement system at any inlet stage of the multi stations which chain up head to tail to continuously produce disentangled melts of given viscosity characteristics.

The apparatus can also include at least one accumulator for collecting the treated molten, moldable material before it is sent to either a pelletizer system or to a pumping station. In one embodiment of the present invention, the accumulator defines a cavity which continues to shear the collected disentangled melt and contains a series of immersed intermeshed rollers with ribs on their surface to preserve and maintain the state of disentanglement until the melt is pumped out of the accumulator by the controlled activation of a screw pump or a gear pump. One non-limiting example of such disentanglement retaining means is the device illustrated by FIG. 8. In another embodiment of the present invention, the disentangled melt is pumped to a pelletizer line which quickly freezes the disentangled melt into pellets which are dried and bagged, ready for shipment. Any type of pelletizer line can be used. Upon reading this specification, those skilled in the art will know what type of pelletizer line can be added to the accumulator to freeze the state of disentanglement obtained through the treatment in order to practice the invention.

The treatment station includes means for exerting a shear vibration coupled with extensional flow on the molten, moldable material contained within the treatment cavity. The vibration is either created through direct oscillating means or indirectly, through the rotation of at least one profiled surface (i.e. with rib means) in contact with the molten moldable material. In other words, even pure continuous rotation in only one direction can locally oscillate the melt because of the presence of the rib means which periodically and locally accelerate and decelerate the melt as it moves past the ribs, bumps or grooves in the treatment gap. In one embodiment of the invention, a shaft supporting a surface in contact with the molten moldable material is oscillated by means known to a person in the art or any combination of them. A rotary vibration can be induced by hydraulic, pneumatic, electrical, electromagnetic means and the use of cams, connecting rods, and/or crankshafts. Any skilled person in the art will know how to create a rotary oscillation of frequency between 1 Hz and 100 Hz and of amplitude between 0.1 and 20 degrees, depending on the overall dimensions of the device. The periodic motion created does not require to be a pure sine wave and can be a mixture of several sine waves to create such periodic oscillation as square waves, triangular waves and the like.

In another embodiment of the present invention, the oscillation of the shaft connected to at least one surface in contact with the molten moldable material is coupled with a continuous rotation of the shaft, occurring at a certain rotation per minute. The coupling of the two motions can be done by programming the combined motion profile, which corresponds to a modulated rotation, and requesting the PID controller to follow the desired signal. But this solution may require extraneous efforts from the electric motors or hydraulic actuators and, in another embodiment of the present invention, the two motions are implemented from separately independent means, such as two electrical motors, and combined through an epicycle differential to recreate the modulated rotation on the shaft of the treatment cavity. In yet another embodiment of the present invention, two oscillatory motions of different frequency and amplitude are combined through the epicyclic differential to optimize shear vibration and extensional fatigue of the molten moldable material in order to practice the invention.

Another object of the present invention is to enable a shear vibration under extensional flow to occur with a full control of the strain rate and of the acceleration and deceleration of the shear strain. US Patent 5,885,495 teaches how to set both the frequency and amplitude of a shear vibration at a given temperature to achieve a high elastic state of the melt producing extensive shear-thinning favorable for producing disentanglement of the macromolecules and obtain a reduction of melt viscosity. But strain, strain rate and strain acceleration are the derivative of one another and cannot be set independently. As explained earlier, the use of ribs and/or grooves and/or bumps (collectively and separately here called "rib means") to profile and modulate the gap dimension, in conjunction with the relative motion of the surfaces which carry those ribs/grooves, allows to further control the degree of extensional flow, melt fatigue and melt flow acceleration/deceleration. The number of ribs/grooves, the spacing between the ribs/grooves, the height of the ribs/grooves, the width of the ribs/grooves, the surface area of the ribs versus the surface area of the grooves, are all interrelated parameters of the present invention, which are set to create a high elastic state in the melt to produce a large viscosity reduction and disentanglement. The addition of rib means increases to 3 or 4 degrees of freedom (depending on whether one or two surfaces are structured with ribs/grooves) instead of 2 in US 5, 855, 495, the ability to apply to the melt a chosen strain rate, strain amplitude and frequency of shear vibration under extensional fatigue. The advantage of the extra degree(s) of freedom can be used, in a specific embodiment of the present invention, to optimize viscosity-reduction and disentanglement effects, i.e. reduce the energy required to disentangle a certain quantity of entangled resin and/or increase the throughput by accelerating the kinetics. Upon reading this specification, those skilled in the art will know how to calculate the dimensions of the ribs, their number and the speed of rotation of the lateral dragging flow to produce the desired and controlled strain rate and acceleration/deceleration in the treatment cavity in order to practice the invention.

In another embodiment of the present invention, the ribs/bumps top surface is curved to smooth out any sharp angle which could be detrimental to the flow, in particular with regard to non linear flow defects which might arise from unsmoothed angles including the formation of microbubbles. Specifically, the shape of the bumps/ribs is to avoid such non linear flow defects.

In yet another embodiment of the present invention, the shape and relative disposition (pitch) of the ribs/bumps is determined by their ability to create local stress fields which can percolate into a cooperative network for specific conditions of rotation speed $\Omega$, frequency $\omega$ and amplitude $\alpha$ of shear vibration, and temperature. That is the stress fields of one rib must overlap that of an adjacent rib.

Also included in this apparatus are means for continuously moving the melt, e.g. to drag and/or pump the melt located in the station treatment cavity from the inlet conduit towards its outlet conduit. This is accomplished by means of the disposition of the ribs with respect to the rotational flow direction. If the ribs are disposed perpendicular to the rotation direction, the molten moldable material is dragged in that direction and any motion in the longitudinal direction is due to pressure flow exerted at the inlet of the treatment cavity. Pressure might have a negative effect on shear-thinning and/or the kinetics of disentanglement and, for this reason, should be maintained in the range which does not adversely affect the treatment. By orienting the ribs by a certain angle with respect to the axis of rotation, it is possible to create a longitudinal drag component with its own strain rate and acceleration. This longitudinal component of the rotational motion creates a pumping effect which reduces the pressure required to produce certain flow rate and contributes to the transport and disentanglement of the molten moldable material. Upon reading this specification, those skilled in the art will know what ribs orientation will produce the desired and controlled pumping effect in the treatment cavity in order to practice the invention.

In one embodiment of the present invention, the surface profile of ribs/grooves is created by machining and grooving the surface of the treatment cavity permanently and in another embodiment of the present invention, foils of profiled strips which are manufactured separately are laid over and firmly mounted, for instance tack-welded on the body of the treating surfaces. In one embodiment of the present invention the strips are made of a metallic material and, in another embodiment, they are made of any other material capable of sustaining the combination of shear forces, vibration and temperature required for the treatment.

The treatment station includes means for varying the amplitude of the shear vibration applied on the molten moldable material as it flows through from the inlet to the outlet of the treatment station. US Patent 5,885,495 teaches that slippage may occur at high amplitude of melt shear oscillation which disrupts the efficiency of the disentanglement process. When the desired amplitude for disentanglement is applied all at once, the risks of slippage are increased, which suggests to gradually increase the strain amplitude of vibration until the correct combination of frequency-temperature and strain % is obtained. In a discontinuous process, such as described in US Patent 5,885,495, the settings and parameters are programmed to vary gradually, which avoids the slippage problem. Specifically, the strain % of the shear vibration is increased little by little in step-wise fashion, given a certain temperature and frequency of oscillation. Likewise, at a given temperature and strain %, the frequency is increased little by little until the desired combined setting is achieved. For a continuous disentanglement process, the gradual increase of the strain % can be accomplished by a gradual change of the geometry of the gap along the pathway of melt flow. The strain amplitude is function of the gap geometry, as explained before. For example, one can increase the shear strain % by increasing the radius of the cylinders of the annulus which form the gap. Specifically, a preferred embodiment of the present invention uses a pair of concentric conic surfaces for defining the gap in the treatment cavity. This preferred embodiment offers the added advantage of being able to easily change the gap dimension by pulling the inner cone surface with respect to the outside cone surface. Gaps between 0.5mm and 5mm can be obtained that way, which can be adjusted on the fly as the molten moldable material flows in the treatment cavity. Another preferred embodiment consists of concentric cylindrical surfaces whose radius increases in stages as flow proceeds from the inlet to the outlet of the treatment cavity.

In one specific embodiment of the present invention, the gap height is automatically adjustable through an actuator and a controller allowing an increase or decrease of the gap at intermittent intervals, thus modulating the gap dimension in a controllable way.

Also included in this apparatus is a means for controlling the temperature of the material within the feeder(s), accumulator(s) and/or treatment cavity. Any suitable temperature controlling means can be employed when practicing this invention.

Examples of suitable temperature control means include, without limitation, the implementation of the following: (a) hot and cold oil circulated through passages in the injection machine, the accumulator, the injection nozzle and/or the mold, (b) resistance cartridges positioned within the injection machine, the accumulator, the injection nozzle and/or the mold, (c) hot pipes inserted into the injection machine, the accumulator, the injection nozzle, and the mold, and/or (d) fluid which is embedded in the injection machine, the accumulator, the injection nozzle and/or the mold and whose temperature can be controlled by dielectric means. Those skilled in the art will be able to select the temperature controlling means which best suits their needs after reading this specification.

Also included in this apparatus is a means for controlling the pressure of the molten moldable material within the feeder(s), accumulator(s) and/or disentanglement treatment cavities. In particular, the rate of flow in the screw pump(s), gear pump(s), treatment cavities and extruder can be controlled by melt pressure in the treatment cavity measured by pressure sensors and transducers. Any suitable pressure controlling means can be employed when practicing this invention. Those skilled in the art will be able to select the pressure controlling means which best suits their needs after reading this specification.

Also included in this apparatus is a means for monitoring and/or controlling the torque of the material within the treatment cavity. The torque is directly related to the modulus of the molten moldable material being treated and reflects the state of viscosity. Any suitable torque monitoring and/or controlling means can be employed when practicing this invention.

Examples of suitable torque control means include, without limitation, the implementation of the following: (a) measure of the current used by the motor (s) to maintain a given rotation speed of the shaft driving the relative motion of at least one surface in contact with the molten moldable material to be disentangled, (b) installation of a shear stress transducer at the end of the treatment cavity, (c) measure of the speed of transmission and attenuation of ultrasonic acoustic waves through the gap in the treatment cavity. Those skilled in the art will be able to select the torque controlling means which best suits their needs after reading this specification.

In addition to the above, the apparatus can include many different optional features. For example, the apparatus can include a purge valve which can be positioned between the accumulator(s) and the mold and/or between the feeder(s) and the accumulator(s).

Another optional feature which can be included in the present invention is a mixing chamber positioned in the pathway of the inlet to the treatment cavity and/or at the outlet of the treatment cavity. This mixing chamber, which can consist of a static mixer in one preferred embodiment, can homogenize the temperature and the viscosity of the molten moldable material, and optimize the mixing of the different slices of the molten moldable material treated in the gap of the treatment cavity. In the case several feeders are used, the mixing chamber creates a more homogeneous mix of the different ingredients.

Specific embodiments of this invention are illustrated in the figures. These illustrations are merely examples of manners in which to practice the invention. They are, in no way, intended to limit the scope of this invention.

Other objects, aspects and advantages of the present invention will be apparent to those skilled in the art upon reading the specification and the appended claims which follow.

A more complete appreciation of the present invention, and many of the attendant advantages thereof, will be readily ascertained as the invention becomes better understood by reference to the following detailed description, when considered in connection with the accompanying figures briefly described below.

Referring now to FIGS. 1A to 1F, FIG. 1A is a schematic illustration of one embodiment of a disentanglement apparatus designed in accordance with the present invention having a single feeder 4 and a single treatment cavity 3, between an undersurface 2 of a top member 54 and a top surface 56 of a bottom member 58 wherein the shear vibration under extensional flow is produced by rotating at constant speed and/or at modulated speed and/or by pure oscillation an incoming melt 1 which flows outwards over ribs or rib means 5 disposed on at least one surface 2. The molten moldable material 1 flows circularly from the center of the disk to the rim where a doctor blade collects it and a gear pump positively displaces it away from the treatment cavity. The cavity gap 3 is structured by the ribs 5 which can be shaped and configured in a variety of ways, as shown in FIGS. 1C, 1D, 1E and 1F, specifically designed to exert the maximum control over the strain rate, strain rate periodic variation with given frequency and extensional strain as the melt flows over the rib means from the inlet to the outlet and in order to optimize its disentanglement.

In one embodiment of the present invention, one surface in contact with the melt rotates at constant speed $\Omega$ and the other surface is fixed. The strain rate is locally modulated by the presence of the ribs which create the extensional vibration required to produce the high elastic state responsible for shear-thinning and, in time, disentanglement effects. The number of ribs, the spacing between them (pitch) the height of the ribs, the width of the ribs, and the height of the gap in between the ribs are all interrelated parameters of the present invention, which must be specifically designed in order to produce the adequate periodic strain rate with proper frequency, strain amplitude and frequency capable of producing disentanglement effects, as taught in US 5,855,495. For instance, for a gap height between 0.5 and 4mm, rib height can be approximately 25% of gap height and rib width 50% of gap height. The number of ribs, to be spaced regularly, depends on the strain and frequency required to increase elasticity/shear-thinning for the disentanglement process and on the speed of rotation which determines angular, and thus tangential velocity across the ribs. When the space between the ribs is relatively important, care should be taken to design the ribs corners and shape angles to avoid local turbulence and other non linear flow defects. FIGS. 1A to 1F show several possible geometries for the ribs 5. In one embodiment of the invention (FIG. 1F), the height of the ribs is not constant across the radius and increases slightly from the center of the disk to the edge, or vice versa. In another embodiment of the present invention, the ribs surface is not flat but is, instead, grooved at regular intervals perpendicular to the radial direction of flow (FIGS. 1C and 1D).

In another embodiment of the present invention, the moving surface is not rotating but oscillates back and forth with a certain amplitude a and frequency $\omega$. Yet, in another embodiment of the present invention a combination of oscillation and constant rotation is exerted on the moving surface. The value of the amplitude and frequency of vibration and the value of the melt temperature are determined according to US Patent 5,885,495 in order to increase the amount of elasticity in the melt, and through shear-thinning. The constant speed of rotation $\Omega$ is also determined to bring the melt within the proper processing window for disentanglement to occur, and its value is adjusted, along with the number of ribs, the geometry of the ribs and their disposition with respect to melt flow direction, in order to optimize disentanglement, that is to say favor the kinetics of viscosity reduction to make it as efficient as possible in the shortest time as possible.

In another preferred embodiment of the present invention, both surfaces in contact with the molten moldable material have ribs and/or grooves. Yet, in another important embodiment of the present invention, both surfaces in contact with the molten moldable material are in controlled independent motion. In this case, although the apparatus is more complicated to design and operate, disentanglement is more efficient and occurs deeper throughout the cavity gap, allowing the use of wider gaps which results in increased productivity.

FIGS. 2A and 2B are schematic illustrations of one embodiment of a disentanglement apparatus designed in accordance with the present invention having a single feeder and a single treatment cavity, wherein the shear vibration under extensional flow is produced by feeding a molten moldable material 3 through a gap (also identified by numeral 3) composed of at least one rotating and/or oscillating surface 6 or 7 presenting on its contour a profile over which the molten material flows and/or can be dragged and/or is being pushed through and/or pumped through. In FIG. 2B the outside surface 6 may be rotated/oscillated at constant speed $\Omega$ and constant frequency and amplitude of oscillation (when oscillation is added) and the other e.g. cylindrical surface 7 may be fixed, or, conversely, surface 7 may be rotated/oscillated (FIG. 2A) at constant speed and surface 6 may be fixed, or, both surfaces may be rotated/oscillated independently. The strain rate is locally modulated by the presence of ribs and/or grooves on either surface 6 and 7, or on both surfaces, which create the extensional and fatigue flow with vibration required to produce disentanglement effects. As already emphasized, the number of ribs/grooves, the height of the ribs/grooves, the width of the ribs/grooves, are all inter-related parameters of the present invention, which must be specifically designed in order to produce the adequate strain rate, strain amplitude and frequency capable of producing disentanglement effects, as taught in US Patent 5,855,495. For instance, the rib on one surface might be a continuous bump configured as a right helix, whereas its counterpart on the facing surface across the gap_is another helix with same pitch but turning left. The two helices can be grooved at an angle with the axis of the helix to produce a periodic variation of the gap height along the helix rib top surface. In such a case, when the two surfaces are put in relative motion, by the rotation of at least one surface, the melt is not only sheared and oscillated under extensional flow but also dragged through towards the exit end. The molten moldable material 3 flows helicoidally from the inlet of the treatment cavity, at the left of FIG. 2A, toward the outlet, at the right, where it is collected and a gear pump positively displaces it away from the treatment cavity, or it is used to fill a mold cavity which happens when the invention is applied in conjunction with a valve gate system in hot runner applications, for example. The cavity gap 3 is profiled by the ribs which can be shaped and configured in a variety of ways, as already shown in FIGS. 1A to 1F, specifically designed to exert the maximum control over the strain rate, strain rate variation and extensional strain as the melt flows from the inlet to the outlet and in order to optimize viscosity reduction and disentanglement. Band heaters 8 are located around the metallic surfaces defining the cavity and are controlled by thermocouples (not shown in FIG. 2A) in PID control loops 32.

The apparatus of the invention as illustrated in FIGS. 2A and 2B thus is for continuously reducing the viscosity of molten moldable polymeric material 3 by shear vibration under extensional flow to cause shear-thinning conditions ideal for disentanglement, the apparatus including at least one station treatment cavity defined by a gap composed of two closely separated surfaces 6 and 7 in relative motion with each other at given speed and/or submitted to relative oscillations, with given frequency and amplitude, as to produce a shear deformation on the molten moldable material 3 and a controlled variation of the gap dimension by axial, circumferential, radial or other undulations of either or both surfaces 6 and 7, presenting on their contour a profile of ribs and/or bumps and/or grooves over which the molten moldable material 3 can flow and/or can be dragged and/or is being pushed through and/or pumped through. The treatment cavity has an inlet 30 through which the molten moldable material 3 can pass into and an outlet 31 through which it can exit the treatment cavity. The treatment cavity geometry allows the shear strain and the shear strain rate imposed on the passing molten moldable material to vary controllably. At least one feeder 33 is for preparing the molten moldable material 3, the feeder including a means for expelling the molten, moldable material through its outlet into the station treatment cavity inlet 30. In this embodiment at least one accumulator 34 is provided for collecting the treated molten, moldable material before it is sent to either a pelletizer system or to a pumping station or to a mold cavity. Means such as a driver 35 are provided for exerting the shear vibration of given frequency and amplitude coupled with fatigue extensional flow on the molten moldable material 3 contained within the treatment cavity. An example of means for controllably varying the gap dimension which the molten moldable material can pass and/or flow through are shown in the embodiment of FIG. 6 there a central member of the apparatus is generally conical and can be moved axially (laterally) to vary the gap. An example of means for continuously venting the treatment cavity to prevent the formation of bubbles or cavitation during the treatment is schematically shown at 36 in FIG. 2A. An example of means for monitoring and controlling the temperature of the molten moldable material contained within the feeder 33 is schematically shown at 37 in FIG. 2A, for the treatment cavity is schematically shown at 38 and for the pumping station is schematically shown at 39. An example of means for monitoring and controlling the pressure of the molten moldable material contained within the feeder, the treatment cavity and the pumping station are shown schematically at 47, 48 and 49 respectively. An example of means for monitoring and controlling the torque exerted on the molten moldable material contained within the treatment cavity is shown at 50 in FIG. 2A and 2B. With several stations connected to one another through gear pumps or screw pumps such as those at 11 in FIG. 3 or 26 in FIG. 7, the chain of treatment stations have a first station connected directly or through a gear pump and/or a static mixer (e.g. 52 in FIG. 7) to an extruder and a last station connected to a pelletizer line or a pumping station, or a mold cavity for immediate use of the disentangled melt.

In one embodiment of the present invention, one surface in contact with the melt, which has a pattern of ribs as explained in FIG. 1A, is moved longitudinally with speed V, as shown for surface 7 in FIG. 2A, and the other surface is rotated/oscillated. The melt undergoes the effect of a combined (tensorial) periodic strain rate with its two components, in the longitudinal and rotational directions, adjusted to impose an optimized disentanglement effect. Yet, in another embodiment of the present invention, the longitudinal motion of 7 occurs with modulated periodic speed in order to incorporate an oscillation component susceptible to facilitate the raise of the elasticity of the molten moldable material in the gap while the lateral rotation of 6, with or without its own oscillation, contributes, among other things, to the extensional fatigue in order to disentangle the melt according to US Patent 5,885,495.

In another embodiment of the present invention, the moving surface is not rotating but oscillating back and forth with a certain amplitude $\alpha$ and frequency $\omega$. Yet, in another embodiment of the present invention a combination of oscillation and constant rotation is exerted on the moving surface(s). The value of the amplitude and frequency of vibration, the melt temperature, and the constant speed of rotation $\Omega$, along with the number of ribs, are determined according to US Patent 5,885,495 in order to increase the amount of elasticity in the melt, and cause the melt to undergo extensional flow and fatigue, at given value of elasticity (shear-thinning) of the melt, two critical conditions for disentanglement to occur. Specifically, the number of ribs, the geometry of the ribs and their disposition with respect to melt flow direction, are designed not only to create specific acceleration and deceleration patterns in the cavity gap susceptible to favor the kinetics of disentanglement, but, at the same time, to allow a certain pumping of the melt towards the outlet of the treatment cavity by a dragging effect from the component of the strain rate tensor which aligns with the longitudinal direction of flow.

FIG. 3 is a schematic illustration of one embodiment of a disentanglement apparatus designed in accordance with the present invention having a single feeder and more than one treatment cavity, separated by a pumping section 11, wherein the shear vibration under extensional flow in the treatment cavity section is produced by feeding a molten moldable material 3 through a gap composed of at least one rotating and/or oscillating surface 10 presenting on its contour a profile 12 over which the molten material flows and/or can be dragged and/or is being pushed through and/or pumped through, and a barrel 9 which can also be rotated/oscillated or can be stationary and which is heated/cooled through outside means (not represented). The surface profile(s) or rib means 12 consist of different patterns depending on the location of the treatment station along the extrusion axis and adapted to the progressive change of the viscosity. FIG. 3 displays a few patterns possible such as small square/round bumps on the surface, or tilted and elongated ribs creating a split of the strain rate along the rotational and longitudinal axes, but many other designs, all referred to here as rib means, are conceivable, which a person skilled in the art will be able to adapt after reading this disclosure. The pumping station 11 is made of the few flights of a screw pump with given pitch and helix angle to pump the melt at given rate from one treatment station to the next by rotating the core surface 10. The apparatus described in FIG. 3 can be adapted to interface with the basic hardware of an extruder which already provides a barrel 9, heating and cooling means, and a motor to produce the rotation of the moving surface 10, which would replace the screw of the extruder. In one embodiment of the present invention, the feeder which provides a liquid molten moldable material to the treatment cavity is itself another extruder or an extruder connected to a gear pump. For example, the molten moldable material is produced by the first extruder and is distributed through a breaker plate and a cross-head die to the inlet section of the second extruder, perpendicular to the first extruder, which attaches to the left end side of FIG. 3, and as illustrated in FIG. 7 by elements 23 and 24. The moving surface 10 is rotated by the second extruder and its barrel 9 is stationary. The total length of the barrel is adjustable and is function of the numbers of stations required to achieve a certain level of viscosity reduction and the throughput desired.

Yet, in another embodiment of the present invention, only one extruder is needed, but the screw, which is replaced by the treatment apparatus described in FIG. 3 in order to practice the present invention, is substantially extended in length to have a first section performing like a normal screw with its own melting, metering and pressurizing zones, followed by the disentanglement sections described in FIG. 3.

FIG. 4 is a schematic illustration of one embodiment of the treatment cavity of the disentanglement apparatus designed in accordance with the present invention wherein the shear vibration under extensional flow is created in the gap 3 of concentric conic surfaces 13 and 14 in relative motion with respect to one another, at least one of which presenting an array of ribs and bumps 12 and rotating at constant speed $\Omega$, and/or at modulated speed $[\Omega + \Sigma\alpha_i*\sin(\omega_i*t+\theta_i)]$ and/or in a pure oscillation mode $\Sigma \alpha_i*\sin(\omega_i*t+\theta_i)$, where $\alpha_i$, $\omega_i$, $\theta_i$, are, respectively, the modulated amplitude, the frequency and the phase of the oscillation (the subindex "i" refers to the decomposition of the periodic motion into its Fourier's components). As explained before, the speed of rotation, the oscillation parameters, the pitch between the ribs, the shape and dimension of the ribs/bumps and grooves (between the ribs), and the angle of tilt with respect to the cone axis of the ribs, are all inter-related and depend on the strain rate and acceleration required to produce disentanglement, as taught in US Patent 5,885,495.

In FIG. 4, the gap height or width can be increased or decreased by the relative axial or lateral translation of the concentric cones, which can be done through the implementation of linear bearings on the shaft in the direction of the straight double arrow. In a particular and specific embodiment of the present invention, the gap width is automatically adjustable through an actuator and a controller opening or closing the gap, allowing an increase of the gap at intermittent intervals, to facilitate the extrusion of the treated molten moldable material out of the treatment cavity. The reason for such a feature can easily be understood: the disentanglement process requires a relatively narrow gap to implement the conditions of strain and strain rate susceptible to disentangle the melt; but these conditions are not favorable to the throughput. By opening and closing the gap intermittently between a value which is favorable to the treatment and a value which is favorable to the throughput, a compromise can be found which optimizes the disentanglement process. The period between two successive openings of the gap can be programmed between 1 second and 10 minutes, without exclusion of other possible values. The variation of the gap width or height between its minimum and maximum value can be programmed between 5% and 200% of the treatment value.

It is another object of the present invention to have a central computer controlling the value of all the parameters of the disentanglement process. Specifically, in FIG. 4, items 8 and 15 are shown to respectively represent band heaters and cooling circuits to regulate precisely the temperature of the body of the surfaces in contact with the molten moldable material. Temperature probes (not shown) are inserted near the molten moldable material to send electrical signals back to the central processing unit for activating the heating or cooling means in order to maintain the temperature in the gap constant. The operator can interface with a user friendly computer screen to enter all the parameters required to operate the disentanglement apparatus according to the present invention. For example, the operator enters the value of the temperature in the treatment cavity, the speed of rotation of the inner cone 14, the amplitude and frequency of the oscillation of the cone (which can be zero when there is only constant rotation and the rib means alone create the vibration effect) and the period and amplitude of the gap intermittent opening (whose variation can also be zero).

FIG. 5 is a schematic illustration of one embodiment of the treatment cavity of the disentanglement apparatus designed in accordance with the present invention wherein the shear vibration under extensional flow is created in the gap of a series of concentric cylindrical surfaces 13 and 14 of increasing larger diameter, in relative motion with respect to one another, at least one of which presenting an array of ribs and bumps and rotating at constant speed and/or at modulated speed and/or in a pure oscillation mode.

FIG. 6 is a schematic illustration of one embodiment of the treatment cavity of the disentanglement apparatus designed in accordance with the present invention wherein the shear vibration under extensional flow is created in successive sections of the treatment cavity having a variable gap arising from the relative separation of concentric surfaces in relative motion with respect to one another, at least one of which presenting specifically configured and disposed ribs and bumps 12 and rotating at constant speed and/or at modulated speed and/or in a pure oscillation mode. As shown in Fig. 6, the shape of the ribs/bumps and their relative position is varied along the pathway of the molten moldable material in the treatment cavity depending on the amount of local melt pressure, the magnitude of the longitudinal drag strain rate desired and the speed and mode of rotation of the moving surface.

FIG. 7 is a schematic illustration of one embodiment of the disentanglement apparatus designed in accordance with the present invention wherein the feeder 23 is an extruder and/or a plunger, and the disentanglement treatment occurs in a series of stations 24 connected through gear or screw pumps 26. In each of the stations 24, means 25 are provided to rotate and/or oscillate at least one surface in contact with the molten moldable material passing through it in order to create flow conditions favorable to disentanglement, as described in US Patent 5,885,495 and in this disclosure. The temperature, the rotation speed, the oscillation amplitude and frequency are independently set for each station, but are controlled from a central processing unit which overlooks all aspects of this multi-stations disentanglement process. For practicing particular embodiments described earlier in this Patent application, stations 24 and the means 25 can be provided for by traditional extruder drives, for which barrel and screw can be specifically adapted and modified to conform to disclosures specified in FIGS. 3, 4, 5 or 6. Mixing chambers can be added in 26, as well as in 25 means to modulate the gap dimension intermittently. At the end of the multi-stations, the disentangled melt is either pumped into an accumulator, not shown in FIG. 7, but described in this disclosure to prevent the melt to re-entangle, and this accumulator is connected to a pelletizer line and/or to the feed of an extruder or injection molding equipment, or the exiting melt is directly sent into a cavity, such as a mold cavity of a hot runner system using a valve gate modified to encompass the present invention.

FIG. 8 is a schematic illustration of one embodiment of the treatment cavity of the disentanglement apparatus designed in accordance with the present invention wherein the shear vibration under extensional flow on a molten moldable material 3 is created in the gap between cylindrical or conical rollers 27 in close contact to one another and a core surface at the center 28 with ribs, bumps or grooves 12 and which is either cylindrical or conical. FIG. 8 can be considered a cut through the system of cylinders which one could imagine vertical, with their axis perpendicular to the Figure, and the flow of molten moldable material occuring from the inlet at the top, along the axis of the cylinders or cones, towards the outlet at the bottom. More generally, at least one surface 27 or 28 is rotating at constant speed and/or at modulated speed and/or in a pure oscillation mode, as explained in several previous figures. For instance, both surfaces are turning at constant speed, respectively $\Omega$ and $\Omega'$. The rotation of rollers 27 can be from individual power sources or through a common drive, shown as 29 in FIG. 8, which can be a belt or any other appropriate driving mechanism known to the art. At least one surface has a set of ribs/bumps 12 or grooves on it, shaped, disposed and configured to practice the invention, as already disclosed several times for the other figures. It is easy to conceive the presence of ribs/bumps or grooves on the core cylinder 28. Some are shown in FIG. 8. Rollers 27 are in close contact but do not touch each other directly, so they can turn in the same direction (counterclockwise in FIG. 8). In one embodiment of the present invention, the distance which separates them is very small, of the order of 0.03 to 0.05mm in order to prevent the molten moldable material 3 to come through their separation. A set of spring loaded ball bearings can be used to keep the rolling cylinders at very close proximity while rotating in the same direction through means 29 In another embodiment of the present invention, rollers 27 can have ribs and bumps disposed on their surface so that they intermesh in the region of closest proximity. An example of this embodiment is shown at the bottom of FIG. 14. Starting at a certain speed of rotation $\Omega$ c, the layers of molten moldable material in contact with 27 have enough elasticity built up from the speed of rotation of rollers 27 to "stretch over", i.e. ignore the contours of the gap formed where the rollers intermesh or come into close contact, and create an homogeneous round circularly rotating layer which encapsulates and drives in its rotation the rest of the molten moldable material enclosed in the gap between the rollers 27 and roller 28. The stretch-over moving wall, created by cooperative motion across the rotating rollers, can be used, in one preferred embodiment of the present invention, to minimize or avoid slippage at the wall while practicing the disentanglement process through rotation/oscillation of 28. Furthermore, this embodiment allows far greater speed of extrusion through the treatment cavity than is normally available at low pressure drop, because wall slippage is known to prevent fast extrusion throughput. Finally, depending on the speed of rotation of 28, processing the molten moldable material under conditions where a stretch-over layer is created can present positive advantages on the kinetics of disentanglement.

FIG. 9 is a schematic illustration of one embodiment of the treatment cavity of the disentanglement apparatus designed in accordance with the present invention wherein the shear vibration under extensional flow is created by the relative motion in the molten moldable material 17 of a train of oblong members or ovally-shaped wagons 16 circulating, at constant speed or at a modulated speed, in a torus ring in communication with an inlet 21 and an oulet 22 conduits. The motion of 16 is driven by a cylinder 19 through links 18. Cylinder 19 is driven by an actuator connected to a motor. Links 18 are a spider ring connecting rigidly 19 and 16, and letting the flow pass through without resistance or interference. The torus is jacketed by a thermal fluid and/or band heaters and water passages allow control of the temperature inside the ring. As motion of 16 in the molten moldable material 17 is driven by 19, the gap at any specific location of the ring periodically increases and decreases as the ovally shaped wagons pass through it, and thus periodic shear strain conditions are created with intensive extensional flow around the wagons. When the conditions of strain rate and strain rate variation (acceleration/deceleration) are set to practice disentanglement in the molten moldable material according to US Patent 5,885,495, the treated melt is being pushed ahead towards the outlet hole 22 communicating with the inlet 21 of the next torus ring one station down. An assembly of torus rings 67 piling up on top of one another and communicating through their respective inlet and outlet holes is shown in FIG. 10.

FIG. 10 is a schematic illustration of one embodiment of the disentanglement apparatus designed in accordance with the present invention wherein the feeder is an extruder and/or a plunger feeding molten moldable material in 21 of the first torus ring, the disentanglement treatment occurs in each of a series of superposed and interconnected ring stations 17 defined by a tubular track through which a train of ovally-shaped wagons 16 circulate at controlled speed, driven by a common core cylinder 19, attached to the wagons. The molten moldable material is treated according to the present invention, as described in FIG. 9, and exits a ring station in 22 which directly connects with the inlet of the ring station located under it. At each station, the temperature is adapted to account for the change in viscosity produced by disentanglement. At the bottom of the column in FIG. 10, the outlet of the last ring is connected to an accumulator 20 which is itself connected to a pelletizer line and/or the feed of an extruder or injection molding equipment (not shown).

FIG. 11 is a schematic illustration of one embodiment of the power transmission of the disentanglement apparatus designed in accordance with the present invention wherein the shear vibration and the controlled extensional fatigue of the molten moldable material in the treatment cavity are applied on both axes 310 and 320 of an epicyclcloidal differential. An epicyclic differential is composed of 3 principle elements: (a) the case planet carrier 310; (b) the torque arm sleeve sun gear 320; and c) the central bore sun gear 330. These 3 elements are mechanically connected by the sun and planet gears which make up the epicyclic differential gear train.

The shaft attached to the surface to rotate and/or oscillate in the treatment station of the present invention, goes into 330. The Willis formula establishes the relationship between the rotational speeds of the 3 elements 310, 320 and 330, allowing to combine at 330 the motions which are imposed, independently, at 310 and 320:

$$N_3 = \rho N_2 + N_1 / K$$

where N1 is the rotational speed of the case 310, N2 is the instantaneous rotational speed of the torque arm sleeve motion 320, and N3 is the rotational speed found for the motion of the central bore 330. ρ is the internal ratio between the torque arm sleeve 320 and the central bore 330, i.e. when there is no rotation on the 310 axis (the case is maintained fixed). Likewise, K in Willis equation is the reduction ratio between the case 310 and the central bore 330, i.e. when there is no rotary oscillation on N2. Thus a differential also operates as a gear box with reduction ratio K.

Specifically, a rotary vibration motion can be set at 320 and a pure rotation with given controllable speed of rotation at 310. The motions on axes 310 and 320 are totally independent and can be programmed separately. The combination of motions 310 and 320 arises naturally at 330 with no or minimum backlash. According to one embodiment of the present invention, an epicyclic differential can replace the gear box which connects the motor of an extruder and the shaft driving the screw. This replacement allows to simultaneously rotate and oscillate such a shaft as disclosed in FIGS. 3 or 4 which is introduced in the barrel, provided the other axis of the epicyclic differential is driven by a rotary vibrating device. This device can also be used to drive the screw of an injection molding machine, combining rotation and oscillation of the screw, a combination which produces easier flow through extensive shear-thinning.

FIG. 12 is a schematic illustration of one embodiment of the shear vibration transmission of the disentanglement apparatus designed in accordance with the present invention wherein the shear vibration in the molten moldable material in the treatment cavity is created by the oscillation of the inner cone of a concentric conical assembly 114 attached to one axis of an epicyclycloidal differential, the rotary oscillation being created through a cam 110 and a piston 112. In this embodiment, the treatment cavity is a pair of concentric cones, such as disclosed in Figure 4, with a constant gap clearance 114 where the molten moldable material (which fills 114) is sheared and oscillated back and forth through handle 110 activated by a piston 112. Frame 116 includes the heating/cooling jacket filled with thermal fluid and the thermocouple to control the temperature. The clearance gap between the two cones can be adjusted at the beginning of the operation between 0.5mm and 5mm. Once adjusted it remains constant throughout the treatment. The piston arm can be attached to the handle 110 at different level positions 113, which allows to modify the amplitude of the shear rotational vibration along with the torque available. The piston displacement can also be varied, which allows another degree of freedom to modify the amplitude of rotation of the rotary oscillation. The molten moldable material is entered in the apparatus through an extruder and gear pump shown as 111, and is pulled out of the cone assembly through another gear pump 115. In this particular embodiment, the gear pump at the outlet recirculates the throughput back to inlet 111 by a separate connection, allowing several passes before the melt is pumped out of the disentanglement apparatus. In this embodiment, the disentangled melt is produced intermittently but in a continuous way. The extruder inlet valve and the outlet valve 117 to the pelletizer unit are both closed while the several passes of molten material through the treatment cavity occur in close circle. When a desired viscosity reduction has been achieved, after several passes, the extruder is signaled to let in a new batch of untreated molten moldable material in the treatment cavity. The gap clearance can be opened wider during this purge to prevent the disentangled melt to be pressurized. The outlet valve 117 to the pelletizer line is kept open and the recirculation outlet valve (not shown) is kept closed during the purge of the treatment cavity. Conversely, those valves are respectively closed and open during the multi-passes treatment.

FIG. 13 is a schematic illustration of one embodiment of the treatment cavity of the disentanglement apparatus designed in accordance with the present invention wherein the shear vibration under extensional flow in the molten moldable material is created by the relative motion of two concentric conic surfaces at constant speed or at a modulated speed, i.e. combined constant and vibrated speed, or under pure rotary oscillation while the molten moldable material is pushed and/or dragged and/or pumped from the inlet conduit 220 to the outlet conduit 270 of the treatment cavity (FIG. 13). In this embodiment, unlike for the embodiment disclosed in FIG. 12 which applies to an intermittent release of treated molten material, the treatment cavity and its attachments clearly define a station, such as item 24 in FIG. 7, suitable for a continuous disentanglement process. It is clear in FIG. 13 that flanges 220 and 270 are identical, allowing a repeat to other stations of what can be considered standard features in the description of this station. Molten moldable material 250 enters the treatment station through inlet 220, goes through a spider and fills the cavity created by two concentric cones defining a gap. Inlet 220 can be connected to a gear or screw pump. For the first station, as disclosed in FIG. 7, an extruder is used ahead of the gear pump to prepare the molten moldable material and pressurize it to a given value. The inside cone is continued beyond the treatment section 260 to become 280, which is connected to the epicyclic differential with its two independent motion axis, as described in Figure 11. The molten moldable material 250 is flowing from the inlet 220 to the outlet 270 due to the combination of pressure flow, and the rotation of the inside cone and the presence of tilted ribs on the surface of the inside and outside cones, as explained in FIGS. 4 or 6. While the molten moldable material 250 passes through the gap created by the cones, it disentangles due to the combined action of the rotation and/or oscillation of the inside cone 260 through the shaft 280. The temperature and pressure of the molten moldable material is measured at several places 210 along the pathway from 220 to 270. Band heaters 230 are wrapped around the frame and water passages 240 and 242 are made to cool 250 from both the outside (240) and the inside (242) in order to maintain its temperature precisely controlled. The outlet 270 can be connected to a gear or screw pump. In the case of a gear pump, the rotation speed of the pump is controlled to build the melt pressure back to the value required for the next treatment station. FIG. 7 discloses how to build a full chain of treatment stations, such as the one disclosed in FIG. 13, in order to continuously and economically disentangle a polymer resin. The cones can be replaced by cylindrical cavities.

FIGS. 14A and 14B are schematic illustrations of one embodiment of the disentanglement apparatus designed in accordance with the present invention wherein one or several feeders 420 feed molten moldable material to a series of tubular cavities 450, intermeshing or not, which themselves connect, directly (FIG. 14B) or through pumping sections 400, to other series of tubular cavities, until the last array of treatment stations, which connect to a collector 410 and a pellitizer line and/or the feed of an extruder or injection molding equipment (not shown). The surfaces of the tubular cavities are covered with ribs/bumps and/or grooves 450, designed to synthesize the proper strain rate profile to achieve disentanglement and to drag the molten moldable material forward to the next tubular station and along the axis of the tubular cavities. At least one surface 430 is moving in order to shear the melt under vibration and accomplish the extensional fatigue which are the two requirements to produce disentanglement efficiently. This can be exerted through the rotation of rotor 430 at given rotation speed, or by rotary vibration of rotor 430 at given frequency and amplitude, or by combination of the two previous motions. At the FIG. 14B, the two tubular cavities are positioned to intermesh in their center, along their axis, which is an embodiment useful to apply in the accumulator at the final outlet before the pelletizer line to prevent recovery of the disentanglement.

FIGS. 15A to 15C are schematic illustrations of one embodiment of the treatment cavity of the disentanglement apparatus designed in accordance with the present invention wherein the ribs/bumps on at least one of the surfaces in contact with the molten moldable material have a specific shape to create a given profile of strain rate and strain rate variation under extension, and are aligned in a specific manner with respect to the axis of surface rotation in order to create a certain amount of drag flow. FIGS. 15A to 15C define some of the shape parameters and the angle of tilt. The contours of the ribs are calculated to eliminate any possibility of turbulence or other non linear defect in the flow, which should remain laminar. The height of the rib, e, the radius R1, R2 and R3 which define the curvature to accelerate (R1) or decelerate (R3) the flow, can be different along cross sections aa and bb (the cross section bb is not shown here). The strain rate vector decomposes into two components, which defines two directions of drag flow. The shape of the ribs along each axis aa or bb is determined by the strain rate profile desired in these directions. Both profiles can be used to define conditions of shear vibration and/or extensional fatigue which can couple up to optimize shear-thinning and disentanglement effects.

According to another object of this invention the temperature controls of the molding apparatus are varied to enable cooling of the melt at a given rate until a given temperature is reached, while simultaneously adjusting the frequency of shear oscillation as a function of melt temperature in order to maintain a specific state of elasticity of the melt which favors disentanglement efficiency. According to another technique of the invention, the melt temperature is controlled to change between two temperature values by alternately cooling and heating the melt while disentanglement or simply shear thing takes places, and simultaneously adjusting the frequency of shear oscillation as a function of melt temperature in order to maintain a specific state of elasticity of the melt which favors disentanglement efficiency.

In one embodiment of the present invention, the melt temperature in each of the treatment stations is made to vary along the pathway of the extrudate passing through it, by gradually varying the velocity of a thermal cooling fluid flowing in the coolant runners embedded in the barrel walls, to produce a cooling effect with determined rate from the inlet of the station to the outlet, provided the coolest temperature is greater than the Tc whose value is determined by the given cooling rate.

In one embodiment of the invention, cooling fluids are circulating within runners located in short sections of the treatment station, each section with its own fluid velocity controlled by the amount of opening/closing of a needle gate located at the inlet or outlet of the cooling section.

In another embodiment of the present invention, cooling effect within a treatment station can be realized by increasing or decreasing the cross-section area of the runners and/or changing their location with respect to the moving melt under treatment and/or by interposing materials, heat sinks or gaps of different thermal conductivity (for instance air gaps) between the cooling medium and the melt passageway.

In yet another preferred embodiment of the present invention, the temperature of the thermal fluid passing through the embedded runners varies, for instance by controlled mixing of two fluids at two different temperatures, or the endlessly repeated sequence of the successive passage of two fluids maintained at different temperatures.

In another embodiment of the present invention, the melt temperature in the treatment station is locally varied by means of dielectric heaters and/or microwave heaters in combination with conductive means.

Any suitable temperature controlling means can be employed when practicing this invention. Those skilled in the art will be able to select the temperature controlling means which best suit their needs after reading this specification.

In another embodiment of the present invention, the apparatus which produce shear oscillation under extension of the melt is constantly adjusted as a function of the temperature of the melt, while the disentanglement treatment takes place in the station, in order to keep the relative elasticity, (G'/G*) equal to a predetermined value. Any suitable controlling means of the oscillation frequency and amplitude as a function of temperature can be employed when practicing this invention, including, without limitation, closed loop controllers, PID controllers, fuzzy logic controllers and the like. Those skilled in the art will be able to select the controlling means which best suit their needs after reading this specification.

In another embodiment of the present invention the means that produce the continuous drag at constant speed of the melt by relative motion of the surfaces confining the melt are constantly adjusted as a function of the temperature of the melt, while the disentanglement treatment takes place in the station, in order to keep the relative elasticity, (G'/G*) equal to a predetermined value. Any suitable controlling means of the drag speed as a function of temperature can be employed when practicing this invention, including, without limitation, closed loop controllers, PID controllers, fuzzy logic controllers and the like.

FIG. 16 demonstrates the effect of cooling rate on the value of the onset of crystallization temperature, Tc for a semi-crystalline polymer melt. The slowly cooled melt, cooled at approximately 10°C/min, starts to crystallize at 240°C. This corresponds to the sharp drop of the specific volume in the bottom trace of FIG. 16, associated with the formation of a more dense phase, the crystallites. FIG. 17 shows that the melt elasticity of the amorphous state is disrupted and interfered with by the presence of the crystallites which act as cross-linking tie points between the macromolecules. The sharp increase of the relative elasticity is not due to an increased cooperative interaction between the macromolecules, which is a criterion to induce disentanglement, but rather to the increase of the tie points.

The upper trace in FIG. 16 corresponds to a melt cooled at approximately 200°C/min. The onset of crystallization is now at Tc = 180°C, which is 60°C below the temperature of crystallization for the slowly cooled melt.

As a consequence of the effect of cooling rate on the value of Tc, the amorphous nature of the melt is preserved to lower temperatures, here an extra 60°C. Temperature is decreasing as one submits the melt to a fast cooling rate, and, eventually, it reaches the new Tc where crystallization takes place. For instance, it takes 18 seconds to cool from 240°C to 180°C at 200°C/min. If we control temperature in such a way that it starts to raise just before it reaches the new Tc, then the melt does not crystallize and remains amorphous over an extended 60°C, which can be made available for disentanglement purpose by increasing its elasticity through shear oscillation under extensional fatigue. For instance, if one chooses to disentangle the amorphous melt when its relative elasticity (G'/G*) = 0.83, FIG. 17 shows that for a frequency of 10 rad/s, it is not possible to reach that elasticity level without the interference of an intense crystallization which takes place starting at Tc = 242°C. The value of (G'/G*) is only equal to 0.3 at the onset of crystallization, for this frequency. This value can be raised by using higher frequency of shear oscillation. Using the time-temperature superposition principle which applies to the rheological behavior of viscoelastic melts, one can calculate the frequency which should be applied to raise the elasticity of the melt at T = 242°C from (G'/G*) = 0.3 to (G'/G*) = 0.83. The suggested frequency is 5,382 rad/s (857 Hz). While achieving such frequency of oscillation is certainly doable, it would not be economically practical and/or would cause serious problems of noise in a production environment. A preferred solution is precisely the purpose of the present invention. If the temperature could be lowered to 220°C, which is below the Tc at slow cooling rate (and therefore not doable without the means of the present invention), but above the Tc of the fast cooling rate, the frequency of oscillation to raise (G'/G*) to the proper disentanglement range becomes 166 rad/s (27 Hz), which is within the practical range of acceptable industrial solutions, for economic reasons. Reducing temperature further down to 200°C would lower oscillation frequency even lower, in order to maintain the same value for (G'/G*).

According to the present invention, as applied to Nylon 66 for example, the melt temperature is decreased during the disentanglement treatment in such a way as to lower Tc by e.g. 60°C, by the effect of a fast cooling rate on Tc, and subsequently increased to avoid cooling past 180°C, which is the Tc of the fastly cooled melt, until another temperature is reached, at which stage the cooling cycle starts over again. More specifically, the upper temperature can be T = 245°C, and the lower temperature 185°C. The cycle time to reverse the change of temperature is 18 seconds. This can be achieved in many different ways by those skilled in the art, who will be able to select the temperature controlling means which best suit their needs.

One advantageous and economical means consists in alternatively pumping at fast flow rate a thermal fluid accumulated in isothermally maintained tanks at two temperatures, one temperature higher by approximatively 15°C than the upper temperature of the cycle range, the other lower by also 15°C than the lower temperature of the range. The individual fluids are only pumped for a portion of the cycle time to allow for inertia effect to take place at the switch of pumping fluids. The temperature of the fluids in the tank can be adjusted, along with the proportional timing for alternating the pumping of the two fluids, in order to achieve the correct temperature profile which fits the disentanglement treatment. Those skilled in the art would know how to design and control such a system, built with temperature controllers, thermocouples, heating and cooling means, and a servo-controlled switching valve, all in a servo-loop conveniently programmable from a master computer.

In another embodiment of the present invention, the temperature is profiled along the pathway of the flowing melt by controlling the flow rate of the cooling thermal fluid circulating in the coolant runners or the cooling jackets inside the die and/or barrel of the treatment cavity. For example, the coolant thermal fluid can circulate, from the exit end of the treatment station towards the inlet, in a spirally shaped runner of decreasing cross-section, located further away from the melt cavity as it gets closer to the inlet end of the station, resulting in a gradient of cooling capacity along the melt flow axis. Other means known to those in the art of mold temperature control, such as band heaters, heat pipes, heat sinks, air gaps etc, can be used to create the correct temperature difference between the inlet and the outlet of the treatment station to generate the desired cooling rate profile as the melt passes through. The same temperature profile can be repeated from station to station, maintaining the melt in an amorphous state as disentanglement proceeds.

For a given temperature, elasticity increases with frequency. For a given frequency, elasticity increases as temperature decreases. In order to control precisely the amount of elasticity of the melt at each temperature, a preferred embodiment of the present invention is to adjust the value of the frequency of shear oscillation to optimize disentanglement at each melt temperature. Accordingly, in a preferred embodiment of the present invention, the number of ribs, bumps or grooves per turn on the rotating surfaces of the treatment station varies with the temperature of the melt at that location. The density of rib means decreases as temperature decreases, and conversely, increases as temperature increases along the pathway.

When the disentanglement system is made up of a series of small sections which can be independently controlled mechanically and thermally, each section temperature can be coupled with the optimum disentanglement variables at that temperature: the best oscillation frequency, the best rotation speed, and the best strain amplitude for the extensional fatigue. The temperature profile is determined by the temperature difference between adjacent sections.

When the temperature of the thermal fluid is cycled in time, the frequency of oscillation is synchronized to vary according to a program to maintain the desired elasticity profile that optimizes disentanglement at all times. For most practical applications, frequency can be varied between 1 and 100 Hz.

FIG. 18 illustrates an embodiment of the invention 500 that includes a pair of polymer melt treatment chambers or annular (cylindrical or conical or both) gaps 506 and 510, defined between the inner and out surfaces of a continously rotatable (Ω) and/or rotatably oscillatable (ω, α) rotor or cylinder 508, and the outer surface of inner fixes cylinder or cone 504, and the inner surface of outer fixed cylinder or cone 512. The surfaces of rotor 506 are provided with the rib means of the present invention and/or the surfaces of fixed members 504 and 512 that bound gaps 506 and 510 have the rib means thereon, as long as there are at least one set of rib means in each chamber. A fixed shaft or support 502 carries the fixed member 504.

Examples of possible diameters for the surfaces in the embodiment of FIG. 18 are: outside of 502 is 7.62cm; outside of 504 is 15.24cm; inside of 508 is 15.88cm; outside of 508 is 23.50cm; inside of 512 24.36cm; and outside of 512 is 32.98cm. The gaps 506 and 510 are typically 1.6mm to 6mm but can be thicker or thinner depending on the type of melt and the element diameters. This is for minimum through-put of 65 kg/hour for polycarbonate.

FIG. 19 illustrated an embodiment of the invention that has a rotor, stem, screw, tube or shaft 602 for bounding the inside of a melt treatment gap and rotatable and or oscillatable about its axis. Rib means 604 in the surface of rotor 602 are in the form of honeycomb rib means. Although hexagonal cells of the honeycomb means 604 are illustrated, other polygonal shapes can be used. Each cell has a pair or side wall 606 that extend at an angle θ to the flow direction F which is also parallel to the rotor axis. Each cell also has upstream and downstream transverse walls 612, 608, and upstream and downstream angles walls 614, 610. The transverse walls extend at an oblique angle to the flow direction F while the angles walls extend at an acute angle. These walls also intersect the upstream and downstream ends of the next side wall 606 in the honeycomb means. This arrangement has been found by the inventor to be very useful in that it causes the repeated and periodic dividing of the melt as in pass each intersection as the rotor rotates, thus advancing the local acceleration/ deceleration of the melt at each intersection and creating the viscosity reducing effect. Typical wall thicknesses for the walls of the honeycomb means is from about 0.15mm to about 1.0mm, depending on the diameter D of the rotor 602 and the rotation speed (continuous and/or oscillating), frequency and amplitude, and melt type. Wall height is typically about 0.1mm to 1.0mm. The distance d between side walls 606 also depends rotor diameter, speed and melt type. Distance d is typically about 1.5 to 5.0mm. The angle θ may be 2 to 85° or preferably about 30 to 60°.

The embodiment of FIGS. 20 and 21 comprises a rotor, stem, screw, tube or shaft 702 for bounding the inside of a melt treatment gap and rotatable and or oscillatable about its axis. Rib means 704 in the surface of rotor 702 are in the form of rail means that are reminiscent of rail road tracks. Rail means 704 are formed of pairs of parallel rail walls 708 spaced by distance 1 (about 0.1 to about 1.2mm) that is comparable to the distance d for the honeycomb means of FIG. 19, and extending at angle θ to the flow direction F as was the case in the FIG. 19 embodiment. A plurality of cross or tie walls 708 extend between the rail walls. The wall height hr of rail walls 706 is about 0.5 to 1.5mm, and the width wr is about 0.4 to 1.2mm. The bases of the cross walls 708 are space by wb from each other by about 0.5 to a few centimeters depending on the strain rate acceleration requirements, along the rail walls and are shorter that the rail walls 706, with a height e of about 0.1 to 1.5mm. The top width wt of each cross wall is about 0.1 to 1.5mm. The sides of the cross walls 708 are inclined at an angle δ to the surface of rotor 702 by about 25 to 89°.

FIG. 22 is an embodiment of the invention which is applied to a valve gate in the hot runner system of an injection molding machine. The valve gate has a gate portion 802 with a passage 804 for receiving a polymer melt, and a stem or rod 808 having a valve face or end 818 that can be moved axially by known drive means schematically shown by arrow 812. To open and close the passage and admit or stop the flow of melt into a valve gate busing 806, the stem 808 is moved in the direction of arrow 812. As with the other embodiments of the invention, stem 808 and/or the inner surface of bushing 806, carry rib means 810 and is continuously and/or oscillatingly rotated (Ω; ω, α) about its axis. This produces a significant reduction in the viscosity and injection pressure of the melt. The viscosity is reduced with or without an increase in temperature, resulting in a shorted cycle time.

The rotation of the stem and even axial movement can be imparted to the stem 808 to advance the melt in bushing 806. The continuous rotational speed of stem 808 is a function of the diameter of the stem (for example about 6mm to 15mm) and is mush higher (about 300 to 1700 rpm) than for extrusion machines which use much larger diameter tubes (1 to 125 rpm) .

Similar arrangements are possible for the extruder section, the injection section and various other possible parts of known equipment for processing polymer melts. The complex rib means of the invention can be made using: electro-forming; electro-etching; laser soldering; laser forming; electro-discharge machining (EDM); investment casting or mechanical machining, to name a few. Suitable materials for the rotor and barrel are stainless steel, 4140 steel, high Rockwell bronze and the like. For the rotors the outer surface of a rod, e.g. 9mm in diameter and 23cm long can be formed with the rib means. For the barrel, an 18mm diameter tube, for example, can be cut along a plane parallel to the tube axis, the inner surfaces formed with the rib means and the semicylindrical or semiconical halves welded back together.

As general considerations, the shape, geometry, dimensions and spacing of the ribs, bumps and/or grooves of the rib means are selected and tailored depending on the type of polymer melt to be processed, following the criterion of my US Patent 5,885,495. These design criterion can be optimized for the specific melt, with the rheological parameters as taught by this patent especially with regard to G'/G*, frequency and amplitude of strain created by the squeezing and relaxing of the melt by the rib means.

## Claims

1. An apparatus for reducing viscosity of a melt of molten moldable polymeric material, the apparatus comprising:

> a gap means (3);
> a drive means (35,29);
> inlet means (30,21,220) defining a gap inlet through which the melt (1) passes into the gap;
> outlet means (31,22,270) defining a gap outlet through which the melt exits the gap;
> a feeder (4,23,33) connected to the gap inlet for preparing the melt and for feeding the melt to the gap inlet,
> **characterized in that** the apparatus is for reducing viscosity of the melt by shear vibration under extensional flow to cause at least shear thinning, said apparatus being further **characterized in that**:

>> the gap means (3) defines first and second surfaces (2, 56, 6, 7, 10, 13, 14) which are spaced from each other to form a treatment cavity gap (3) between the surfaces, at least one of the surfaces being movable relative to the other surface to produce a shear deformation on a polymer melt in the gap;
>> the drive means (35,29) is for moving at least one of the surfaces with respect to the other surface:

>>> rib means (5,12,450,604,704,810) on at least one of said first and second surfaces, said rib means having a contour over which the melt moves, the contour being selected so that the rib means exerts a periodic variation of shear strain rate on the melt as the melt flows through the gap (3) in conjunction with the at least one surface moving to produce local extensional acceleration and deceleration of the melt; whereby the drive means (35,29) cooperates with the rib means (5,12,450,604,704,810) for exerting shear vibration of selected frequency and amplitude coupled with the local extensional acceleration and deceleration of the melt in the gap.

2. The apparatus of claim 1 in which the drive means (35,29) moves rotationally and the rib means (5,12,450,604,704,810) impart the vibration in shear strain rate in said polymer melt (1,3).

3. The apparatus of claim 1 in which the drive means (35,29) moves rotationally and with a periodic vibrational motion, and the rib means (5,12,450,604,704,810) and the drive means together impart the vibration in shear strain rate in said polymer melt.

4. Au apparatus according to claim 1, including an accumulator (34,20) connected to the gap outlet (31,22,270) for collecting the melt from the gap outlet, means for varying the amplitude of the shear vibration applied on the melt, means (29,35) for continuously moving the melt through the gap from the inlet toward the outlet, means (36) for continuously venting the treatment cavity gap to prevent the formation of bubbles or cavitations during the treatment, means (38) for monitoring and controlling the temperature of the melt contained within the treatment cavity gap, means (48) for monitoring and controlling the pressure of the melt within the gap and means (50) for monitoring and controlling a torque exerted on the melt contained within the treatment cavity gap.

5. An apparatus according to claim 1, including a plurality of gap means (3) connected to one another througli gear pumps or screw pumps (11,20), said plural gap means including a first treatment station connected directly or through a gear pump (11,26) and/or a static mixer to an extruder (23), an accumulator (34,20) connected to the gap outlet (31) for collecting the melt from the gap outlet and a last station connected to said at least one accumulator.

6. An apparatus according to claim 1, wherein the rib means (5,12,450,604,704,010) compricc at least one of ribs and bumps and grooves.

7. An apparatus according to claim 4, wherein the means (29,35) for continuously moving the melt comprises at least one of means for pushing and dragging and pumping the melt, the apparatus further including means for controllably varying a width of the gap.

8. An apparatus according to claim 1, wherein said gap (3) is substantially flat, said first and second surfaces (2,56,6,7,10,13,14) being flat.

9. An apparatus according to claim 1, wherein said gap (3) is annular.

10. An apparatus according to claim 9, wherein at least one of said first and second surfaces (2,56,6,7,10,13,14) is cylindrical.

11. An apparatus according to claim 9, wherein at least one of said first and second surfaces (2,56,6,7,10,13,14) is conical.

12. An apparatus according to claim 11, including axial drive means (35) for moving at least one of the surfaces axially to vary the width of the treatment cavity gap (3).

13. An apparatus according to claim 1, wherein said rib means (5,12,450,604,704,810) comprises spaced apart rib walls (706,708) which have a pitch selected so that a stress field caused by one rib wall in the melt overlaps a stress field caused by an adjacent rib wall in the melt.

14. An apparatus according to claim 13, wherein said rib walls extend one of radially, circumferentially and helically.

15. An apparatus according to claim 14, wherein said rib walls are continuous.

16. An apparatus according to claim 14, wherein said rib walls are interrupted.

17. An apparatus according to claim 14, wherein said rib walls vary in height along the at least one of said first and second surfaces (2,56,6,7,10,13,14).

18. An apparatus according to claim 14, wherein said rib walls are V-shaped.

19. An apparatus according to claim 1, wherein the gap (3) is annular and has a radius that changes at least once between the gap inlet (30,21,220) and the gap outlet (31,22,270) of the treatment cavity gap (3).

20. An apparatus according to claim 1, wherein said rib means (5,12,450,604,704,810) comprises a plurality of spaced apart bumps.

21. An apparatus according to claim 20, wherein said bumps are polygonal.

22. An apparatus according to claim 20, wherein said bumps have a rounded contour selected to eliminate turbulence of the melt moving past said bumps.

23. An apparatus according to claim 1, wherein said gap (3) is formed between, a plurality of outer rotors (27) which are rotatable against each other to form an inner space, and an inner rotor (28) rotatable in the inner space, the inner rotor carrying said rib means (5,12,450,604,704,810).

24. An apparatus according to claim 1, wherein said gap (3) is formed by an outer toroidal housing, an inner rotor (19) and a series of oblong members (16) connected to each other and to the rotor and rotatable in the toroidal housing.

25. An apparatus according to claim 1, wherein said gap (3) comprise a pair of housings connected to each other by a pump (11,26) and a rotor rotatable (19,27,28) in each housing defining the gap between each rotor and its respective housing.

26. An apparatus according to claim 1, wherein said gap (3) is annular, said first surface being an outer surface (10) of a rotor and said second surface being an inner surface of a barrel (9) for receiving the rotor.

27. An apparatus according to claim 26, wherein the drive means (29,35) comprises dual drive means for applying a continuous rotation to the rotor (19,27,28) and for applying an oscillating rotation to the rotor for exerting the shear vibration of selected frequency and amplitude.

28. An apparatus according to claim 27, wherein the dual drive means comprises a differential drive means which is capable of independently controlling the continuous rotation and the frequency and amplitude of the oscillating rotation.

29. An apparatus according to claim 28, wherein the differential drive means comprises an epicyclic drive means.

30. An apparatus according to claim 29, including an extruder (23) connected to the gap, the epicyclic drive being connected to the extruder for driving the extruder.

31. An apparatus according to claim 1, wherein the drive means (29,35) cooperates with the rib means (5,12,450,604,704,810) for exerting a shear vibration of selected frequency and amplitude coupled with fatigue extensional flow on the melt in the gap (3) at least to the extent that the melt is subjected to disentanglement.

32. An apparatus according to claim 31, including an accumulator (20,34) connected to the gap outlet for collecting the melt from the gap outlet (22,31,270) and disentanglement retaining means in the accumulator for moving the melt in the accumulator to maintain disentanglement in the melt.

33. An apparatus according to claim 1, wherein the first surface is the outer surface (10) of an extruder rotor and the second surface is the inner surface of an extruder barrel (9) for receiving the extruder rotor, the apparatus including temperature controlling means (37,38,39) for heating and cooling melt in the gap and said drive means (29,35) comprising motor means for rotating the rotor.

34. An apparatus according to claim 1, wherein the first surface is the outer surface of a valve gate rod (808) and the second surface is the inner surface of a valve gate bushing (806) for receiving the rod (808).

35. An apparatus according to claim 1, including an extruder having an outlet and forming at least part of said feeder (23,33,4), and a cross head die connected between the extruder outlet and the gap inlet (20,31) for feeding melt from the extruder outlet to the gap inlet.

36. An apparatus according to claim 1, wherein said first surface is the outer surface (10) of a rotor and carries said rib means (5,12,450,604,704,810), said second surface being an inner surface of a barrel (9) for receiving the rotor, gap passing through a plurality of stations in said barrel (9) tor extruding the melt and for disentangling the melt.

37. An apparatus according to claim 36, wherein at least one of the stations contains a screw (11) on said rotor for moving the melt along the gap, at least one of the stations contains means (48) for pressurizing the melt in the gap, and at least one of the stations includes the rib means (5,12,450,604,704,810) for disentangling the melt.

38. An apparatus according to claim 1, including an injection melting machine connected to the gap for at least one of receiving treated melt from the gap outlet (31,22,270) or supplying untreated melt to the gap inlet (30,21,220).

39. An apparatus according to claim 1, including recirculation means (608,610,612,614) connected between a downstream part of the gap and an upstream part of the gap for recirculating at least some of the melt for additional viscosity reduction treatment in the gap.

40. An apparatus according to claim 1, including temperature control means (38) for controlling the temperature along the gap.

41. An apparatus according to claim 40, wherein the temperature control means (38) controls the temperature along the gap to maintain a selected elasticity of the melt.

**42.** An apparatus according to claim 40, wherein the temperature control means (38) controls the temperature along the gap (3) to maintain a selected temperature profile of the melt along the gap.

**43.** An apparatus according to claim 1, wherein the rib means (5,12,450,604,704,810) have a density distribution of ribs along at least one of the first and second surfaces (2,56,6,7,10,13,14), the apparatus including temperature control means (38) for controlling the temperature along the gap, the temperature being controlled to change along the gap as a function of the rib density with higher temperature corresponding with higher rib density.

**44.** An apparatus for producing a disentangled polymer comprising:

means (37,38,39) for raising the temperature of a polymer until it melts into a melt; shear means for subjecting the melt to a disentanglement treatment by shear occillation under extensional fatigue deformation until a state of entanglement between macromolecules of the polymer has been altered to a desired level as measured by a change in viscosity of the melt; melt temperature control means (37,38,39) for varying the temperature of the melt during the disentanglement treatment in a manner which induces lowering of the temperature of crystallization of the polymer by a dynamic effect of cooling rate on the onset of crystallization while avoiding crossing of such a transition conveying means (23,33,4) for conveying the melt to a station; and processing means for subjecting the melt to a further operation for solidifying the polymer.

**45.** An apparatus as recited in uletim 44, wherein said melt temperature control means (37,38,39) enable cooling of the melt at a selected rate until a selected temperature is reached, while simultaneously adjusting the frequency of the shear oscillation as a function of melt temperature in order to maintain a specific state of elasticity of the melt which favors disentanglement efficiency.

**46.** An apparatus as recited in claim 44, wherein said melt temperature control means (37,38,39) enable cooling of the melt at a selected rate until a selected temperature is reached, while simultaneously adjusting the amplitude of the shear oscillation as a function of melt temperature in order to maintain a specific state of elasticity of the melt which favors disentanglement efficiency and avoid melt fracture.

**47.** An apparatus as recited in claim 44, wherein said melt temperature control means (37,38,39) enable cooling of the melt at a selected rate until a selected temperature is reached, while simultaneously adjusting the rate of shear flow to which the melt is subjected as a function of melt temperature in order to maintain a specific state of elasticity of the melt which favors disentanglement efficiency.

**48.** An apparatus as recited in claim 47, wherein the shear means comprise rotating surfaces (502,504,508,512) cngaged with the melt, the rotation speed of the rotating surfaces in contact with the melt being programmed as a function of melt temperature in order to maintain a specific state of elasticity of the melt which favors disentanglement efficiency.

**49.** An apparatus as recited in claim 48, wherein at least one of the rotating surfaces has ribs (5,12,450,604,704,810), the number of ribs per turn on the rotating surface being selected to create a local extensional shear periodic deformation, which varies with the temperature of the melt at that location.

**50.** An apparatus as recited in claim 49, wherein a density of said ribe on the surface at any given location of the disentanglement treatment decreases as temperature decreases, and, conversely, increases as temperature increases, according to the requirement to maintain at each location a specific state of elasticity of the melt which favors disentanglement.

**51.** An apparatus as recited in claim 44, wherein said melt temperature control means (37,38,39) enable the melt temperature to vary controllably between two temperatures by alternatively cooling and heating the melt while disentanglement takes places and simultaneously adjusting the frequency, amplitude and of shear oscillation as a function of melt temperature in order to maintain a specific state of elasticity of the melt which favors disentanglement efficiency.

**52.** An apparatus as recited in claim 44, wherein the melt temperature is profiled along the pathway of the flowing melt by controlling the flow rate of the cooling thermal fluid circulating in coolant runners or cooling jackets (15,240,242) inside the die and/or barrel (9) of the treatment cavity.

**53.** An apparatus as recited in claim 52, wherein the coolant thermal fluid can circulate, from the exit end of the treatment station towards the inlet, in a spirally shaped runner of decreasing cross-section, located further away from the melt cavity as it gets closer to the inlet end of the station, resulting in a gradient of cooling capacity along the melt flow axis.

**54.** An apparatus as recited in claim 49, wherein melt temperature control means (37,38,39) are those known in the art of mold temperature control, such as band heaters (8), heat pipes, heat sinks, air gaps, designed and activated to create the correct temperature difference between the inlet and the outlet of the treatment station to generate the desired cooling rate profile as the melt passes through.

**55.** An apparatus as recited in claim 44, wherein the same temperature profile can be repeated from station to station, maintaining the melt in an amorphous state as disentanglement proceeds.

**56.** An apparatus as recited in claim 44, wherein a different temperature profile is imposed within the treatment cavity of each station, to account for the changing properties of the disentangled melt as the treatment proceeds from station to the next maintaining the melt in an amorphous state as disentanglement proceeds.

**Patentansprüche**

**1.** Gerät zur Reduzierung der Viskosität einer Schmelze aus flüssigem, formbarem Polymermaterial, wobei das Gerät folgendes umfasst:

ein Fugenmittel (2);
ein Antriebsmittel (35, 29);
Einlassmittel (30, 21, 220), das einen Fugeneinlass definiert, durch welchen die Schmelze (1) in die Fuge einströmt;
Auslassmittel (31, 22, 270), das einen Fugenauslass definiert, durch welchen die Schmelze aus der Fuge austritt;
eine Zuführungseinheit (4, 23, 33), die am Fugeneinlass zur Vorbereitung der Schmelze und zur Zuführung der Schmelze in den Fugeneinlass verbunden ist,
**dadurch gekennzeichnet, dass** das Gerät zur Reduzierung der Viskosität der Schmelze durch Schervibration unter Dehnströmung dient, um zumindest eine Strukturviskosität zu verursachen, wobei das genannte Gerät ferner **dadurch gekennzeichnet ist:**

**dass** das Fugenmittel (3) erste und zweite Oberflächen (2, 56, 6, 7, 10, 13, 14) definiert, die voneinander beabstandet sind, um eine Bearbeitungs-Hohlraumfuge (3) zwischen den Oberflächen zu bilden, wobei zumindest eine der Oberflächen relativ zur Außenfläche bewegbar ist, um eine Scherverformung an einer Polymerschmelze in der Fuge zu erzeugen;
**dass** das Antriebsmittel (35, 29) zum Bewegen zumindest einer der Oberflächen hinsichtlich der anderen Oberfläche dient; Dehnschienenmittel (5, 12, 450, 604, 704, 810) an zumindest einer der genannten ersten und zweiten Oberflächen, wobei die genannten Dehnschienenmittel eine Kontur aufweisen, über welcher sich die Schmelze bewegt, wobei die Kontur derart ausgewählt ist, dass die Dehnschienenmittel eine regelmäßige Variation der Scherverformungsgeschwindigkeit auf die Schmelze ausüben, während die Schmelze durch die Fuge (3) strömt, in Verbindung mit der zumindest einen Oberfläche, die sich bewegt, um eine örtliche Beschleunigung und Verlangsamung der Schmelze zu erzeugen; wobei das Antriebsmittel (35, 29) mit den Dehnschienenmitteln (5, 12, 450, 604, 704, 810) zur Ausübung der Schervibration einer ausgewählten Frequenz und Auslenkung, gekoppelt mit der örtlichen Beschleunigung und Verlangsamung der Schmelze in der Fuge, zusammenwirkt.

**2.** Gerät nach Anspruch 1, bei welchem das Antriebsmittel (35, 29) sich drehend bewegt und die Dehnschienenmittel (5, 12, 450, 604, 704, 810) der Scherverformungsgeschwindigkeit in der genannten Polymerschmelze (1, 3) die Vibration vermitteln.

**3.** Gerät nach Anspruch 1, bei welchem sich das Antriebsmittel (35, 29) drehend und mit einer regelmäßigen Vibrationsbewegung bewegt und bei dem die Dehnschienenmittel (5, 12, 450, 504, 704, 810) und das Antriebsmittel zusammen der Scherverformungsgeschwindigkeit in der genannten Polymerschmelze die Vibration vermitteln.

**4.** Gerät nach Anspruch 1, enthaltend einen Akkumulator (34, 20), der am Fugenauslass (31, 22, 270) zum Einsammeln der Schmelze vom Fugenauslass angeschlossen ist, ein Mittel zum Variieren der Auslenkung der auf die Schmelze angewandten Schervibration, ein Mittel (29, 35) zum kontinuierlichen Bewegen der Schmelze durch die Fuge vom Einlass in Richtung des Auslasses, ein Mittel (36) zur kontinuierlichen Entlüftung der Bearbeitungs-Hohlraumfuge zur Verhinderung der Blasen- oder Hohlraumbildung während der Bearbeitung, ein Mittel (38) zur Überwachung und Kontrolle der Temperatur der innerhalb der Bearbeitungs-Hohlraumfuge enthaltenen Schmelze, ein Mittel (48) zur Überwachung und Kontrolle des Drucks der Schmelze innerhalb der Fuge und ein Mittel (50) zur Überwachung und Kontrolle eines Drehmoments, der auf die innerhalb der Bearbeitungs-Hohlraumfuge enthaltene Schmelze ausgeübt wird.

**5.** Gerät nach Anspruch 1, enthaltend eine Vielzahl von Fugenmitteln (3), die durch Zahnradpumpen oder Schraubenpumpen (11, 20) miteinander verbunden sind, wobei die genannten mehrfachen Fugenmittel eine erste Bearbeitungsstation enthalten, die direkt oder durch eine Zahnradpumpe (11, 26) und/oder durch einen statischen Mischer mit einem Extruder (22) verbunden sind, einen Akkumulator (34, 20), der zum Einsammeln der Schmelze vom Fugenauslass mit dem Fugenauslass (31) verbunden ist, und eine letzte Station, die mit dem genannten zumindest einen Akkumulator verbunden ist.

6. Gerät nach Anspruch 1, wobei die Dehnschienenmittel (5, 12, 450, 604, 704, 810) zumindest eine der Dehnschienen und Erhebungen und Rillen umfassen.

7. Gerät nach Anspruch 4, wobei das Mittel (29, 35) zur kontinuierlichen Bewegung der Schmelze zumindest ein Mittel zum Drücken und Schleppen der Schmelze umfasst und wobei das Gerät ferner Mittel zur kontrollierbaren Bestätigung einer Breite der Fuge enthält.

8. Gerät nach Anspruch 1, wobei die genannte Fuge (3) im Wesentlich flach ist, wobei die genannten ersten und zweiten Oberflächen (2, 56, 6, 7, 10, 13, 14) flach sind.

9. Gerät nach Anspruch 1, wobei die genannte Fuge (3) ringförmig ist.

10. Gerät nach Anspruch 9, wobei zumindest eine der genannten ersten und zweiten Oberflächen (2, 56, 6, 7, 10, 13, 14) zylindrisch ist.

11. Gerät nach Anspruch 9, wobei zumindest eine der genannten ersten und zweiten Oberflächen (2, 56, 6, 7, 10, 13, 14) konisch ist.

12. Gerät nach Anspruch 11, enthaltend einen Axialantrieb (35) zur axialen Bewegung von zumindest einer der Oberflächen, um die Breite der Bearbeitungs-Hohlraumfuge (3) zu bestätigen.

13. Gerät nach Anspruch 1, wobei das genannte Dehnschienenmittel (5, 12, 450, 604, 704, 810) Dehnschienenwände (706, 708) umfasst, die voneinander beabstandet sind, die einen Abstand aufweisen, der derart ausgewählt ist, dass eine durch eine Dehnschienenwand in der Schmelze verursachte Feldstärke eine durch eine benachbarte Dehnschienenwand in der Schmelze verursachte Feldstärke überlappt.

14. Gerät nach Anspruch 13, wobei die genannten Dehnschienenwände sich jeweils radial, peripher und spiralförmig erstrecken.

15. Gerät nach Anspruch 14, wobei die genannten Dehnschienenwände kontinuierlich sind.

16. Gerät nach Anspruch 14, wobei die genannten Dehnschienenwände unterbrochen sind.

17. Gerät nach Anspruch 14, wobei die genannten Dehnschienenwände entlang der zumindest einen der genannten ersten und zweiten Oberflächen (2, 56, 6, 7, 10, 13, 14) in ihrer Höhe variieren.

18. Gerät nach Anspruch 14, wobei die genannten Dehnschienenwände V-förmig sind.

19. Gerät nach Anspruch 1, wobei die Fuge (3) ringförmig ist und einen Radius aufweist, der sich zumindest einmal zwischen dem Fugeneinlass (30, 21, 220) und dem Fugenauslass (31, 22, 270) der Bearbeitungs-Hohlraumfuge (3) ändert.

20. Gerät nach Anspruch 1, wobei das genannte Dehnschienenmittel (5, 12, 450, 604, 704, 810) eine Vielzahl von voneinander beabstandeten Erhebungen umfasst.

21. Gerät nach Anspruch 20, wobei die genannten Erhebungen mehreckig sind.

22. Gerät nach Anspruch 20, wobei die genannten Erhebungen eine abgerundete Kontur aufweisen, die ausgewählt ist, um Turbulenzen der an den genannten Erhebungen vorbei strömenden Schmelze zu vermeiden.

23. Gerät nach Anspruch 1, wobei die genannte Fuge (3) zwischen einer Vielzahl von äußeren Laufrädern (27), die gegeneinander drehbar sind, um einen inneren Raum zu bilden, und einem inneren Laufrad gebildet ist, das in den inneren Raum drehbar ist, wobei das innere Laufrad (28) das genannte Dehnschienenmittel (5, 12, 450, 604, 704, 810) trägt.

24. Gerät nach Anspruch 1, wobei die genannte Fuge (3) durch ein äußeres Ringgehäuse, ein inneres Laufrad (19) und eine Reihe von länglichen Elementen (15) gebildet ist, die miteinander und an dem Laufrad verbunden und drehbar in dem Ringgehäuse angeordnet sind.

25. Gerät nach Anspruch 1, wobei die genannte Fuge (3) ein Gehäusepaar umfasst, die miteinander durch eine Pumpe (11, 26) und ein Laufrad (19, 27, 28) verbunden sind, das in jedem Gehäuse, drehbar angeordnet ist und die Fuge zwischen jedem Laufrad und seinem entsprechenden Gehäuse definiert.

26. Gerät nach Anspruch 1, wobei die genannte Fuge (3) ringförmig ist, die genannte erste Oberfläche eine äußere Oberfläche (10) eines Laufrads ist und die genannte zweite Oberfläche eine innere Oberfläche einer Trommel (9) zur Aufnahme des Laufrads ist.

27. Gerät nach Anspruch 26, wobei das Antriebsmittel (29, 35) doppelte Antriebsmittel zur Anwendung einer kontinuierlichen Umdrehung an das Laufrad (19, 27, 28) und zur Anwendung einer schwingenden Umdrehung auf das Laufrad zur Ausübung der Schervibration der ausgewählten Frequenz und Auslenkung umfasst.

28. Gerät nach Anspruch 27, wobei das doppelte Antriebsmittel ein Differenzialantriebsmittel umfasst, das in der Lage ist, die kontinuierliche Umdrehung und die Frequenz und Auslenkung der schwingenden Umdrehung unabhängig zu regeln.

29. Gerät nach Anspruch 28, wobei das Differenzialantriebsmittel ein Planetenantriebsmittel umfasst.

30. Gerät nach Anspruch 29, enthaltend einen Extruder (23), der mit der Fuge verbunden ist, wobei der Planetenantrieb zum Antrieb des Extruders mit dem Extruder verbunden ist.

31. Gerät nach Anspruch 1, wobei das Antriebsmittel (29, 35) mit dem Dehnschienenmittel (5, 12, 450, 604, 704, 810) zur Ausübung einer Schervibration auf die ausgewählte Frequenz und Auslenkung, gekoppelt mit einer Dauerdehnströmung an der Schmelze in der Fuge (3) zumindest in dem Ausmaß zusammenwirkt, dass die Schmelze einer Herauslösung unterworfen ist.

32. Gerät nach Anspruch 31, enthaltend einen Akkumulator (20, 34), der mit dem Fugenauslass zum Einsammeln der Schmelze vom Fugenauslass (22, 31, 270) verbunden ist und ein Herauslösungsrückhaltemittel in dem Akkumulator zum Bewegen der Schmelze im Akkumulator, um die Herauslösung in der Schmelze aufrecht zu erhalten.

33. Gerät nach Anspruch 1, wobei die erste Oberfläche die äußere Oberfläche (10) eines Extruderlaufrads und die zweite Oberfläche die innere Oberfläche einer Extrudertrommel (9) zur Aufnahme des Extruderlaufrads ist, wobei das Gerät ein Temperaturregelungsmittel (37, 38, 39) zum Erwärmen und Kühlen der Schmelze in der Fuge enthält und das genannte Antriebsmittel (29, 35) ein Motormittel für die Umdrehung des Laufrads umfasst.

34. Gerät nach Anspruch 1, wobei die erste Oberfläche die äußere Oberfläche einer Schieberventilstange (808), und die zweite Oberfläche die innere Oberfläche einer Schieberventilbuchse (806) zur Aufnahme der Stange (808) ist.

35. Gerät nach Anspruch 1, enthaltend einen Extruder mit einem Auslass, der zumindest einen Teil der genannten Zuführung (23, 33, 4) bildet, und mit einem Kreuzkopfgesenk, das zwischen dem Extruderauslass und dem Fugeneinlass (20, 31) für die Zuführung der Schmelze vom Extruderauslass zum Fugeneinlass verbunden ist.

36. Gerät nach Anspruch 1, wobei die genannte erste Oberfläche die äußere Oberfläche (10) eines Laufrads ist und das genannte Dehnschienenmittel (5, 12, 450, 604, 704, 810) trägt, die genannte zweite Oberfläche eine innere Oberfläche einer Trommel (9) zur Aufnahme des Laufrads, der Fuge, die durch eine Vielzahl von Stationen in der genannten Trommel (9) zur Extrusion der Schmelze und zur Herauslösung der Schmelze, ist.

37. Gerät nach Anspruch 36, wobei zumindest eine der Stationen eine Schraube (11) an dem genannten Laufrad zur Bewegung der Schmelze entlang der Fuge enthält, wobei zumindest eine der Stationen ein Mittel (48) zur Druckbeaufschlagung der Schmelze in der Fuge enthält und zumindest eine der Stationen ein Dehnschienenventil (5, 12, 450, 604, 704, 810) zur Herauslösung der Schmelze enthält.

38. Gerät nach Anspruch 1, enthaltend eine Spritzgussmaschine, die zumindest entweder zur Aufnahme von bearbeiteter Schmelze vom Fugenauslass (31, 22, 270) oder zur Zulieferung von unbearbeiteter Schmelze zum Fugeneinlass (30, 21, 220) an der Fuge angeschlossen ist.

39. Gerät nach Anspruch 1, enthaltend ein Rückführungsmittel (609, 610, 612, 614), das zwischen dem nachgeordneten Teil der Fuge und einem vorgeordneten Teil der Fuge zur Rückführung von zumindest einem Teil der Schmelze für eine zusätzliche Viskositätsreduktionsbearbeitung in der Fuge verbunden ist.

40. Gerät nach Anspruch 1, enthaltend ein Temperaturregelungsmittel (38) zur Regelung der Temperatur entlang der Fuge.

41. Gerät nach Anspruch 40, wobei das Temperaturregelungsmittel (38) die Temperatur entlang der Fuge derart regelt, um die ausgewählte Elastizität der Schmelze aufrecht zu erhalten.

42. Gerät nach Anspruch 40, wobei das Temperaturregelungsmittel (38) die Temperatur entlang der Fuge (3) derart regelt, um das ausgewählte Temperaturprofil der Schmelze entlang der Fuge aufrecht zu erhalten.

43. Gerät nach Anspruch 1, wobei die Dehnschienenmittel (5, 12, 450, 604, 704, 810) eine Verteilung der Dehnschienendichte entlang zumindest einer der ersten oder zweiten Oberfläche (2, 56, 6, 7, 10, 13, 14) aufweisen, das Gerät enthaltend das Temperaturregelungsmittel (38) zur Regelung der Temperatur entlang der Fuge, wobei die Temperatur geregelt wird, um sich entlang der Fuge als eine Funktion der Dehnschienendichte zu verändern, wobei die höhere Temperatur der höheren Dehnschienendichte entspricht.

44. Gerät zur Herstellung eines heraus gelösten Polymers, umfassend:

Ein Mittel (37, 38, 39) zur Erhöhung der Temperatur eines Polymers, bis es sich in eine Schmelze verflüssigt;
ein Schermittel zum Unterwerfen der Schmelze an eine Herauslösungsbearbeitung durch Scherschwingung unter Extrusionsdauerverformung, bis der Zustand der Herauslösung zwischen den Makromolekülen des Polymers auf einen gewünschten Stand verändert worden ist, gemessen an der Viskositätsveränderung der Schmelze;
ein Temperaturregelungsmittel (37, 38, 39) der Schmelze zum Variieren der Temperatur der Schmelze während der Herauslösungsbearbeitung auf eine Weise, die das Senken der Temperatur der Kristallisierung des Polymers durch einen dynamischen Effekt der Abkühlungsgeschwindigkeit bei der Entstehung der Kristallisierung hervorruft, während die Kreuzung eines solchen Übergangs vermieden wird
ein Fördermittel (23, 33, 4) zum Fördern der Schmelze an eine Station und
ein Verarbeitungsmittel zum Unterwerfen der Schmelze an einen weiteren Betrieb zur Verfestigung des Polymers.

45. Gerät nach Anspruch 44, wobei das genannte Temperaturregelungsmittel (37, 38, 39) der Schmelze das Abkühlen der Schmelze bei einer ausgewählten Geschwindigkeit ermöglicht, bis eine ausgewählte Temperatur erreicht worden ist, während gleichzeitig die Frequenz der Scherschwingung als eine Funktion der Schmelztemperatur eingestellt wird, um einen spezifischen Elastizitätszustand der Schmelze aufrecht zu erhalten, der die Herauslösungseffizienz begünstigt.

46. Gerät nach Anspruch 44, wobei das genannte Temperaturregelungsmittel (37, 38, 39) der Schmelze das Abkühlen der Schmelze bei einer ausgewählten Geschwindigkeit ermöglicht, bis eine ausgewählte Temperatur erreicht worden ist, während gleichzeitig die Auslenkung der Scherschwingung als eine Funktion der Schmelztemperatur eingestellt wird, um einen spezifischen Elastizitätszustand der Schmelze aufrecht zu erhalten, der die Herauslösungseffizienz begünstigt und Schmelzbrüche verhindert.

47. Gerät nach Anspruch 44, wobei das genannte Temperaturregelungsmittel (37, 38, 39) der Schmelze das Abkühlen der Schmelze bei einer ausgewählten Geschwindigkeit ermöglicht, bis eine ausgewählte Temperatur erreicht worden ist, während gleichzeitig die Scherströmungsgeschwindigkeit, welcher die Schmelze als eine Funktion der Schmelztemperatur unterworfen ist, eingestellt wird, um einen spezifischen Elastizitätszustand der Schmelze aufrecht zu erhalten, der die Herauslösungseffizienz begünstigt.

48. Gerät nach Anspruch 47, wobei die Schermittel drehende Oberflächen (502, 504, 408, 512) umfassen, die mit der Schmelze in Eingriff stehen, die Drehgeschwindigkeit der drehenden Oberflächen in Kontakt mit der als eine Funktion der Schmelztemperatur zu programmierenden Schmelze steht, um einen spezifischen Elastizitätszustand der Schmelze aufrecht zu erhalten, der die Herauslösungseffizienz begünstigt.

49. Gerät nach Anspruch 48, wobei zumindest eine der drehenden Oberflächen Dehnschienen (5, 12, 450, 604, 704, 810) aufweist, wobei die Anzahl der Dehnschienen pro Umdrehung an der Drehoberfläche derart ausgewählt ist, um eine regelmäßige örtliche Dehnscherverformung erzeugt, die mit der Temperatur der Schmelze an dieser Stelle variiert.

50. Gerät nach Anspruch 49, wobei sich je nach Anforderung die Dichte der genannten Dehnschienen an der Oberfläche einer beliebigen Stelle der Herauslösungsbearbeitung bei abnehmender Temperatur verringert, und umgekehrt, sich bei steigender Temperatur erhöht, um an jeder Stelle einen spezifischen Elastizitätszustand der Schmelze aufrecht zu erhalten, der die Herauslösung begünstigt.

51. Gerät nach Anspruch 44, wobei die genannten Temperaturregelungsmittel (37, 38, 39) der Schmelze die Schmelztemperatur dazu befähigen, sich kontrollierbar zwischen zwei Temperaturen durch abwechselnde Abkühlung und Erwärmung der Schmelze während die Herauslösung stattfindet zu variieren, und gleichzeitig die Frequenz, Auslenkung und Scherschwingung als eine Funktion der Schmelztemperatur einzustellen, um einen spezifischen Elastizitätszustand der Schmelze aufrecht zu erhalten, der die Herauslösungseffizienz begünstigt.

52. Gerät nach Anspruch 44, wobei die Schmelztemperatur entlang des Wegs der strömenden Schmelze durch die Regelung der Anströmgeschwindigkeit der abkühlenden Umlaufflüssigkeit profiliert wird, die in Kühlmittelläufern oder Kühlmänteln (15, 240, 242) im Inneren des Gesenks und/oder der Trommel (9) des Bearbeitungshohlraums zirkuliert.

53. Gerät nach Anspruch 52, wobei Kühlmittel-Umlaufflüssigkeit vom Ausgangsende der Bearbeitungsstation in Richtung des Einlasses in einem spiralförmigen Läufer eines abnehmenden Querschnitts zirkulieren kann, der sich weiter entfernt von dem Schmelzhohlraum befindet, je dichter sie sich dem Einlassende der Station nähert, was zu einem Abfall der Kühlkapazität entlang der Schmelzströmachse führt.

54. Gerät nach Anspruch 49, wobei es sich bei den Temperaturregelungsmitteln (37, 38, 39) der Schmelze um solche handelt, die nach dem Stand der Technik einer Gießform-Temperaturregelung bekannt ist, z.B. Bandheizkörper (8), Wärmerohre, Kühlkörper, Luftspalte, die derart ausgelegt sind und aktiviert werden, um den korrekten Temperaturunterschied zwischen dem Einlass und dem Auslass der Bearbeitungsstation herzustellen, um das gewünschte Kühlungsgeschwindigkeitsprofil zu erzeugen, während die Schmelze durchströmt.

55. Gerät nach Anspruch 44, wobei dasselbe Temperaturprofil von Station zu Station wiederholt werden kann, wobei die Schmelze in einem amorphen Zustand gehalten wird, während die Herauslösung stattfindet.

56. Gerät nach Anspruch 44, wobei ein unterschiedliches Temperaturprofil innerhalb des Bearbeitungshohlraums jeder Station auferlegt wird, um die sich ändernden Eigenschaften der heraus gelösten Schmelze zu berücksichtigen, während die Bearbeitung von der Station als nächstes mit der Aufrechterhaltung der Schmelze in einem amorphen Zustand fortfährt, während die Herauslösung stattfindet.

## Revendications

1. Appareil pour réduire la viscosité d'une fusion d'un matériau polymérique moulable fondu, l'appareil comprenant :

un moyen d'écartement (3) ;
un moyen d'entraînement (35, 29) ;
un moyen d'entrée (30, 21, 220) définissant une entrée d'écartement à travers laquelle la fusion (1) passe dans l'éaartement ;
un moyen de sortie (31, 22, 270) définissant une sortie d'écartement à travers laquelle la fusion sort de l'écartement ;
un dispositif d'alimentation (4, 23, 33) connecté à l'entrée d'écartement pour préparer la fusion et pour alimenter la fusion dans l'entrée d'écartement,
**caractérisé en ce que** l'appareil est pour réduire la viscosité de la fusion par vibration de cisaillement en flux extensionnel pour provoquer au moins l'amincissement de cisaillement, ledit appareil étant en outre **caractérisé en ce que** :

le moyen d'écartement (3) définit la première surface et la seconde surface (2, 56, 6, 7, 10, 13, 14) qui sont espacées l'une de l'autre pour former un écartement de cavité de traitement (3) entre les surfaces, au moins l'une des surfaces étant mobile par rapport à l'autre surface pour produire une déformation de cisaillement sur une fusion de polymère dans l'écartement ;
le moyen d'entraînement (35, 29) est pour déplacer au moins l'une des surfaces par rapport à l'autre surface ;
un moyen de nervure (5, 12, 450, 604, 704, 810) sur au moins l'une de ladite première surface et de ladite seconde surface, ledit moyen de nervure ayant un contour sur lequel la fusion se déplace, le contour étant sélectionné de manière à ce que le moyen de nervure exerce une variation périodique du taux de tension de cisaillement sur la fusion au fur et à mesure que la fusion s'écoule à travers l'écartement (3) en relation avec ladite au moins une surface se déplaçant pour produire une accélération et une décélération extensionnelle locale de la fusion; moyennant quoi le moyen d'entraînement (35, 29) coopère avec le moyen de nervure (5, 12, 450, 604, 704, 810) pour exercer la vibration de cisaillement de la fréquence sélectionnée et de l'amplitude couplée à l'accélération et à la décélération extensionnelle locale de la fusion dans l'écartement.

2. Appareil selon la revendication 1 dans lequel le moyen d'entraînement (35, 29) se déplace en rotation et le moyen de nervure (5, 12, 450, 604, 704, 810) applique la vibration au taux de tension de cisaillement dans ladite fusion de polymère (1, 3).

3. Appareil selon la revendication 1 dans lequel le moyen d'entraînement (35, 29) se déplace en rotation et avec un mouvement de vibration périodique, et le moyen de nervure (5, 12, 450, 604, 704, 810) et le moyen d'entraînement appliquent ensemble la vibration au taux de tension de cisaillement dans ladite fusion de polymère.

4. Appareil selon la revendication 1, comprenant un accumulateur (34, 20) connecté à la sortie d'écartement (31, 22, 270) pour collecter la fusion provenant de la sortie d'écartement, un moyen pour faire varier l'amplitude de la vibration de cisaillement appliquée sur la fusion, un moyen (29, 35) pour déplacer en continu la fusion à travers l'écartement de l'entrée vers la sortie, un moyen (36) pour ventiler en continu l'écartement de cavité de traitement pour empêcher la formation de bulles ou de cavitations pendant le traitement, un moyen (38) pour surveiller et contrôler la température de la fusion contenue à l'intérieur de l'écartement de cavité de traitement, un moyen (48) pour surveiller et contrôler la pression de la fusion à l'intérieur de l'écartement et un moyen (50) pour surveiller et contrôler un couple exercé sur la fusion contenue à l'intérieur de l'écartement de cavité de traitement.

5. Appareil selon la revendication 1, comprenant une pluralité de moyens d'écartement (3) connectés l'un à l'autre à travers des pompes à engrenage ou des pompes à vis (11, 20), ladite pluralité de moyens d'écartement comprenant un premier poste de traitement connecté directernent, ou à travers une pompe à engrenage (11, 26) et/ou un mixeur statique à une extrudeuse (22), un accumulateur (34, 20) connecté à la sortie d'écartement (31) pour collecter la fusion provenant de la sortie d'écartement et un dernier poste connecté au dit au moins un accumulateur.

6. Appareil selon la revendication 1, dans lequel le moyen de nervure (5, 12, 450, 604, 704, 810) comprend au moins l'une des nervures, des bosses et des gorges.

7. Appareil selon la revendication 4, dans lequel le moyen (29, 35) pour déplacer en continu la fusion comprend au moins l'un des moyens pour pousser, tirer et pomper la fusion, l'appareil comprenant en outre un moyen pour faire varier de manière contrôlable une largeur de l'écartement.

8. Appareil selon la revendication 1, dans lequel ledit écartement (3) est sensiblement plat, ladite première surface et ladite seconde surface (2, 56, 6, 7, 10, 13, 14) étant plates.

9. Appareil selon la revendication 1, dans lequel ledit écartement (3) est annulaire.

10. Appareil selon la revendication 9, dans lequel au moins l'une de ladite première surface et de ladite seconde surface (2, 56, 6, 7, 10, 13, 14) est cylindrique.

11. Appareil selon la revendication 9, dans lequel au moins l'une de ladite première surface et de ladite seconde surface (2, 56, 6, 7, 10, 13, 14) est conique.

12. Appareil selon la revendication 11, comprenant un moyen d'entraînement axial (35) pour déplacer au moins l'une des surfaces de manière axiale pour faire varier la largeur de l'écartement de cavité de traitement (3).

13. Appareil selon la revendication 1, dans lequel ledit moyen de nervure (5, 12, 450, 604, 704, 810) comprend des parois de nervure espacées (706, 708) qui ont un pas sélectionné de manière à ce qu'un champ de tension provoqué par une paroi de nervure dans la fusion chevauche un champ de tension provoqué par une paroi de nervure adjacente dans la fusion.

14. Appareil selon la revendication 13, dans lequel lesdites parois de nervures s'étendent de manière radiale, circonférentielle ou hélicoïdale.

15. Appareil selon la revendication 14, dans lequel lesdites parois de nervures sont continues.

16. Appareil selon la revendication 14, dans lequel lesdites parois de nervures sont interrompues.

17. Appareil selon la revendication 14, dans lequel lesdites parois de nervures sont de hauteur variable le long d'au moins l'une de ladite première surface et de ladite seconde surface (2, 56, 6, 7, 10, 13, 14)

18. Appareil selon la revendication 14, dans lequel lesdites parois de nervures sont de forme en V.

19. Appareil selon la revendication 1, dans lequel l'écartement (3) est annulaire et a un rayon qui change au moins une fois entre l'entrée d'écartement (30, 21, 220) et la sortie d'écartement (31, 22, 270) de l'écartement de cavité de traitement (3).

20. Appareil selon la revendication 1, dans lequel le moyen de nervure (5, 12, 450, 604, 704, 810) comprend une pluralité de bosses espacées l'une de l'autre.

21. Appareil selon la revendication 20, dans lequel lesdites bosses sont polygonales.

22. Appareil selon la revendication 20, dans lequel lesdites bosses ont un contour arrondi sélectionné pour éliminer la turbulence de la fusion passant lesdites bosses.

23. Appareil selon la revendication 1, dans lequel ledit écartement (1) est forme entre une pluralité de rotors extérieurs (27) qui peuvent être mis en rotation l'un par rapport à l'autre pour former un espace intérieur, et un rotor intérieur (28) qui peut être mis en rotation dans l'espace intérieur, le rotor intérieur portant ledit moyen de nervure (5, 12, 450, 604, 704, 810).

24. Appareil selon la revendication 1, dans lequel ledit écartement (3) est formé par un boîtier toroïdal extérieur, un rotor intérieur (19) et une scierie de membres oblongs (15) connectés l'un à autre et au rotor et pouvant être mis en rotation dans le boîtier toroïdal.

25. Appareil selon la revendication 1, dans lequel ledit écartement (3) comprend une paire de boîtiers connectés l'un à l'autre par une pompe (11, 26) et un rotor pouvant être mis en rotation (19, 27, 28) dans chaque boîtier définissant l'écartement entre chaque rotor et son boîtier respectif.

26. Appareil selon la revendication 1, dans lequel ledit écartement (3) est annulaire, ladite première surface étant une surface extérieure (10) d'un rotor et ladite seconde surface étant une surface intérieure d'un barillet (9) pour recevoir le rotor.

27. Appareil selon la revendication 26, dans lequel le moyen d'entraînement (29, 35) comprend un double moyen d'entraînement pour appliquer une rotation continue sur le rotor (19, 27, 28) et pour appliquer une rotation oscillatoire au rotor pour exercer la vibration de cisaillement à la fréquence sélectionnée et à l'amplitude sélectionnée.

28. Appareil selon la revendication 27, dans lequel le double moyen d'entraînement comprend un moyen d'entraînement différentiel qui est capable de contrôler de manière indépendante la rotation continue et la fréquence et l'amplitude de la rotation oscillatoire.

29. Appareil selon la revendication 28, dans lequel le moyen d'entraînement différentiel comprend un moyen d'entraînement épicyclique.

30. Appareil selon la revendication 29, comprenant une extrudeuse (23) connectée à l'écartement, l'entraînement épicyclique étant connecté à l'extrudeuse pour entraîner l'extrudeuse.

31. Appareil selon la revendication 1, dans lequel le moyen d'entraînement (29, 35) coopère avec le moyen de nervure (5, 12, 450, 604, 704, 810) pour exercer une vibration de cisaillement à la fréquence sélectionnée et à l'amplitude sélectionnée couplée au flux extensionnel de fatigue sur la fusion dans l'écartement (3) au moins dans la mesure où la fusion est sujette à un démêlage.

32. Appareil selon la revendication 31, comprenant un accumulateur (20, 34) connecté à la sortie d'écartement pour collecter la fusion provenant de la sortie d'écartement (22, 31, 270) et un moyen de rétention de démêlage dans l'accumulateur pour déplacer la fusion dans l'accumulateur pour maintenir le démêlage dans la fusion.

33. Appareil selon la revendication 1, dans lequel la première surface est la surface extérieure (10) d'un rotor d'extrudeuse et la seconde surface est la surface intérieure d'un barillet d'extrudeuse (9) pour recevoir le rotor d'extrudeuse, l'appareil comprenant un moyen de contrôle de température (37, 38, 39) pour chauffer et refroidir la fusion dans l'écartement et ledit moyen d'entraînement (29, 35) comprenant un moyen de moteur pour faire tourner le rotor.

34. Appareil selon la revendication 1, dans lequel la première surface est la surface extérieure d'une tige de sas de soupape (808) et la seconde surface est la surface intérieure d'une bague de sas de soupape (806) pour recevoir la tige (808).

35. Appareil selon la revendication 1, comprenant une extrudeuse ayant une sortie et formant au moins une partie dudit dispositif d'alimentation (23, 33, 4), et une matrice à tête croisée connectée entre la sortie d'extrudeuse et l'entrée d'écartement (20, 31) pour alimenter la fusion de la sortie d'extrudeuse à l'entrée d'écartement.

36. Appareil selon la revendication 1, dans lequel ladite première surface est la surface extérieure (10) d'un rotor et porte ledit moyen de nervure (5, 12, 450, 604, 704, 810), ladite seconde surface étant une surface intérieure d'un barillet (9) pour recevoir le rotor, l'écartement passant à travers une pluralité de postes dans ledit barillet (9) pour extruder la fusion et pour démêler la fusion.

37. Appareil selon la revendication 36, dans lequel au moins l'un des postes contient une vis (11) sur ledit rotor pour déplacer la fusion le long de l'écartement, au moins l'un des postes contient un moyen (48) pour pressuriser la fusion dans l'écartement, et au moins l'un des postes comprend le moyen de nervure (5, 12, 450, 604, 704, 810) pour démêler la fusion.

38. Appareil selon la revendication 1, comprenant une machine de moulage par injection connectée à l'écartement pour au moins recevoir la fusion traitée de la sortie d'écartement (31, 22, 270) ou fournir la fusion non traitée à l'entrée d'écartement (30, 21, 220).

39. Appareil selon la revendication 1, comprenant un moyen de recirculation (608, 610, 612, 614) connecté entre une partie en aval de l'écartement et une partie en amont de l'écartement pour recirculer au moins une partie de la fusion pour un traitement de réduction de viscosité supplémentaire dans l'écartement.

40. Appareil selon la revendication 1, comprenant un moyen de contrôle de température (38) pour contrôler la température le long de l'écartement.

41. Appareil selon la revendication 40, dans lequel le moyen de contrôle de température (38) contrôle la température le long de l'écartement pour maintenir une élasticité sélectionnée de la fusion.

42. Appareil selon la revendication 40, dans lequel le moyen de contrôle de température (38) contrôle la température le long de l'écartement (3) pour maintenir un profil sélectionné de température de la fusion le long de l'écartement.

43. Appareil selon la revendication 1, dans lequel le moyen de nervure (5, 12, 450, 604, 704, 810) a une répartition de densité des nervures le long d'au moins l'une de la première surface et de la seconde surface (2, 56, 6, 7, 10, 13, 14), l'appareil comprenant un moyen de contrôle de température (38) pour contrôler la température le long de l'écartement, la température étant contrôlée pour changer le long de l'écartement en fonction de la densité de nervure avec la température supérieure correspondant à la densité de nervure supérieure.

44. Appareil pour produire un polymère démêlé comprenant :

un moyen (37, 38, 39) pour augmenter la température d'un polymère jusqu'à ce qu'il fonde dans une fusion ; un moyen de cisaillement pour soumettre la fusion à un traitement de démêlage par oscillation de cisaillement sous une déformation de fatigue extensionnelle jusqu'à ce qu'un état mêlé entre des macromolécules du polymère ait été modifié à un niveau souhaité comme cela est mesuré par un changement de la viscosité de la fusion ;
un moyen de contrôle de température de fusion (37, 38, 39) pour faire varier la température de la fusion pendant le traitement de démêlage d'une manière qui induit une réduction de la température de cristallisation du polymère par un effet dynamique de taux de refroidissement au début de la cristallisation tout en évitant le crioisement d'une transition ;
un moyen de transport (23, 33, 4) pour transporter la fusion jusqu'à un poste ; et
un moyen de traitement pour soumettre la fusion à une autre opération pour solidifier le polymère.

45. Appareil selon la revendication 44, dans lequel ledit moyen de contrôle de température de fusion (37, 38, 39) permet le refroidissement de la fusion à un taux sélectionné jusqu'à ce qu'une température sélectionnée soit atteinte, tout en ajustant simultanément la fréquence de l'oscillation de cisaillement en fonction de la température de fusion pour maintenir un état spécifique d'élasticité de la fusion qui favorise l'efficacité de démêlage.

46. Appareil selon la revendication 44, dans lequel ledit moyen de contrôle de température de fusion (37, 38, 39) permet le refroidissement de la fusion à un taux sélectionné jusqu'à ce qu'une température sélectionnée soit atteinte, tout en ajustant simultanément l'amplitude de l'oscillation de cisaillement en fonction de la température de fusion pour maintenir un état spécifique d'élasticité de la fusion qui favorise l'efficacité de démêlage et qui évite la fracture de la fusion.

47. Appareil selon la revendication 44, dans lequel ledit moyen de contrôle de température de fusion (37, 38, 39) permet le refroidissement de la fusion à un taux sélectionné jusqu'à de qu'une température sélectionnée soit atteinte, tout en ajustant simultanément le taux de flux de cisaillement auquel la fusion est soumise en fonction de la température de fusion pour maintenir un état spécifique d'élasticité de la fusion qui favorise l'efficacité de démêlage.

48. Appareil selon la revendication 47, dans lequel le moyen de cisaillement comprend des surfaces en rotation (502, 504, 508, 512) mises en prise avec la fusion, la vitesse de rotation des surfaces en rotation en contact avec la fusion étant programmée en fonction de la température de fusion pour maintenir un état spécifique d'élasticité de la fusion qui favorise l'efficacité de démêlage.

49. Appareil selon la revendication 40, dans lequel au moins l'une des surfaces en rotation a des nervures (5, 12, 450, 604, 704, 810), le nombre de nervures par tour sur la surface eh rotation étant sélectionné pour créer une déformation périodique de cisaillement extensionnel locale, qui varie avec la température de la fusion à cet emplacement.

50. Appareil selon la revendication 49, dans lequel une densité desdites nervures sur la surface à n'importe quel emplacement donné du traitement de démêlage décroît au fur et à mesure que la température décroît, et réciproquement augmente au fur et à mesure que la température augmente, en fonction de l'exigence de maintien à chaque emplacement d'un état spécifique d'élasticité de la fusion qui favorise le démêlage.

51. Appareil selon la revendication 44, dans lequel ledit moyen de contrôle de température de fusion (37, 38, 39) permet de faire varier la température de fusion de manière contrôlable entre deux températures en refroidissant et en chauffant alternativement la fusion pendant que le démêlage intervient et en ajustant simultanément la fréquence, l'amplitude et l'oscillation de cisaillement en fonction de la température de fusion pour maintenir un état spécifique d'élasticité de la fusion qui favorise l'efficacité de démêlage.

**52.** Appareil selon revendication 44, dans lequel la température de fusion est profilée le long du chemin de la fusion en écoulement en contrôlant 1e taux d'écoulement du fluide thermique de refroidissement circulant dans les glissières de liquide de refroidissement ou dans les chemises de refroidissement (15, 240, 242) à l'intérieur de la matrice et/ou du barillet (9) de la cavité de traitement.

**53.** Appareil selon la revendication 52, dans lequel le fluide thermique de refroidissement peut circuler, de la sortie et du poste de traitement à l'entrée, dans une glissière en forme de spirale de coupe transversale décroissante, située plus à l'écart de la cavité de fusion au fur et à mesure qu'il se rapproche de l'extrémité d'entrée du poste, ce qui engendre un gradient de capacité de refroidissement le long de l'axe d'écoulement de fusion.

**54.** Appareil selon la revendication 49, dans lequel le moyen de contrôle de température de fusion (37, 38, 39) est connu dans l'art du contrôle de température de moulage, comme un chauffage de bande (8), un tuyau de chauffage, un dissipateur thermique, un écartement d'air, conçu et activé pour créer la différence de température correcte entre l'entrée et la sortie du poste de traitement pour générer le profil de taux de refroidissement souhaité au fur et à mesure du passage de la fusion.

**55.** Appareil selon la revendication 44, dans lequel le même profil de température peut être répété d'un poste à l'autre, en maintenant la fusion dans un état amorphe au fur et à mesure de la réalisation du démêlage.

**56.** Appareil selon la revendication 44, dans lequel un profil de température différent est imposé à l'intérieur de la cavité de traitement de chaque poste, pour tenir compte des propriétés changeantes de la fusion démêlée au fur et à mesure du passage du traitement d'un poste à l'autre en maintenant la fusion dans un état amorphe au fur et à mesure de la réalisation du démêlage.

FIG. 1A

FIG. 1B

FIG. 1C

FIG. 1D

FIG. 1E

FIG. 1F

FIG. 2A

PRESS
47

PRESS
48

VENT
36

8

6

TEMP.
39

30

31

ACCUMULATOR
34

FEEDER
33

V

50

7

3

TEMP.
37

PRESS
49

TEMP.
38

CONTROL
42

EP 1 185 405 B1

FIG. 2B

FIG. 3

34

FIG. 4

FIG. 5

FIG. 6

FIG. 7

FIG. 8

FIG. 9

FIG. 10

FIG. 11

FIG. 12A

FIG. 12B

FIG. 13

FIG. 14A

FIG. 14B

FIG. 15A

FIG. 15B

FIG. 15C

FIG. 16

EP 1 185 405 B1

FIG. 17

EP 1 185 405 B1

FIG. 18

FIG. 19

FIG. 20

FIG. 21

FIG. 22